# EUROPÄISCHE PATENTSCHRIFT

(11) **EP 2 762 219 B1**
(45) Veröffentlichungstag und Bekanntmachung des Hinweises auf die Patenterteilung: **26.12.2018**
(21) Anmeldenummer: 14151180.8
(22) Anmeldetag: 14.01.2014
(51) Int. Cl.: B01D 46/24, B01D 46/00

(54) **Becherförmiges Gehäuse und Vorrichtung zum Abscheiden von Flüssigkeit aus Luft**
Cup-shaped housing and device for the separation of liquid from air
Boîtier en forme de coupe et dispositif de séparation de liquide de l'air

(30) Priorität: 04.02.2013 DE 102013001842
(43) Veröffentlichungstag der Anmeldung: 06.08.2014
(73) Patentinhaber: MANN + HUMMEL GMBH, 71636 Ludwigsburg (DE)
(72) Erfinder: Zinic, Daniela, 67373 Dudenhofen (DE); Dworatzek, Klemens, 68535 Edingen (DE); Bartelt, Bertram, 71711 Steinheim (DE)

(56) Entgegenhaltungen:
- DE-A1- 10 329 401
- DE-A1-102005 057 630
- US-A- 5 595 588
- US-A1- 2007 144 350

## Beschreibung

### Technisches Gebiet

Die vorliegende Erfindung betrifft eine Vorrichtung zum Abscheiden von Flüssigkeit aus Luft gemäß dem Oberbegriff des Anspruchs 1. Die Erfindung betrifft des Weiteren ein becherförmiges Gehäuse nach dem Anspruch 16.

### Stand der Technik

Aus der Druckschrift DE 85 01 736.1 U1 ist eine Vorrichtung gemäß dem Oberbegriff des Anspruchs 1 bekannt. Diese bekannte Vorrichtung dient zum Abscheiden von Öltröpfchen aus Luft. Das Filterelement oder Abscheideelement ist als ringförmiger Coalescer ausgebildet, der die feinen Öltröpfchen zu größeren, sich durch Schwerkraft im Abscheideelement und stromab davon nach unten absetzenden Öltropfen zusammenballt. Ein als Gewinderohrstutzen ausgebildeter Nippel ist mit einem Anschlusskopf sowie mit dem becherförmigen Gehäuse, in dem das Filterelement angeordnet ist, lösbar verbindbar. Zum Ableiten der Reinluft weist der Anschlusskopf ein zentrales Standrohr oder ein zylinderförmiges Rohrelement auf, das durch den Nippel ragt und in das Filterelement hineinmündet. Das zum Trennen der abgeschiedenen Flüssigkeit von der gereinigten Luft ausgebildete zylinderförmige Rohrelement ist also gemäß dem Stand der Technik dem Anschlusskopf zugeordnet. Das zylinderförmige Rohrelement erstreckt sich durch den Nippel und überragt diesen. Zum Abführen des abgeschiedenen Öls ist bei der bekannten Vorrichtung zum Abscheiden von Öltröpfchen aus Luft zwischen dem zylinderförmigen Rohrelement und dem Nippel ein Ringspalt angeordnet. Dieser Ringspalt ist mit einem separaten Ablasskanal verbunden.

Des Weiteren sind beispielsweise aus den Druckschriften EP 2 108 424 A1, EP 0 806 564 A1 und US 6 972 092 B Luftentölboxen bekannt, bei denen die Entleerung des abgeschiedenen Öls über einen Ringspalt im Gewinderohrstutzen erfolgt. Gemäß dem Stand der Technik wird das abgeschiedene Öl also über einen Ringspalt abgeführt, der von dem Nippel oder Rohrstutzen umgeben ist, also im Innendurchmesser des Nippels angeordnet ist. Dieser Ringspalt wird durch das Vorsehen eines in den Nippel eingesteckten zusätzlichen Rohrelementes gebildet und ist zwischen dem Nippel und dem zusätzlichen Rohrelement angeordnet.

Aus der Druckschrift DE 8 806 694 U ist eine im Gewinde einer Ablassschraube angeordnete Ablassnut bekannt. Diese bekannte Ablassschraube ermöglicht aber keine Entleerung im vollständig angeschraubten Zustand, sondern muss für die Entleerung zunächst ein Stück aufgedreht werden. Aus den Druckschriften DE 103 29 401 A1 und US 2007/144350 A1 sind Trockenmittelboxen für Druckluftbremsanlagen mit mehreren Dichtungen bekannt.

Der Erfindung liegt die Aufgabe zugrunde, ein becherförmiges Gehäuse gemäß der vorstehend genannten Art, eine Vorrichtung zum Abscheiden von Flüssigkeit aus Luft gemäß der vorstehend genannten Art sowie ein Verfahren zur Montage eines becherförmigen Gehäuses gemäß der vorstehend genannten Art so weiterzubilden, dass zum Abführen der gefilterten Reinluft möglichst wenig Energie benötigt wird.

### Offenbarung der Erfindung

Diese Aufgabe wird durch ein becherförmiges Gehäuse mit den im Anspruch 16 angegebenen Merkmalen sowie durch eine Vorrichtung mit den im Anspruch 1 angegebenen Merkmalen gelöst. Vorteilhafte Ausgestaltungen und zweckmäßige Weiterbildungen der vorliegenden Erfindung sind in den jeweiligen Unteransprüchen gekennzeichnet.

Mithin basiert die Erfindung darauf, dass zum Abdichten zwischen der Rohluftseite und der Reinluftseite, insbesondere des rohluftseitigen Rohlufteinlasses von der reinluftseitigen Öffnung, an der vom Innenraum des becherförmigen Gehäuses abgewandten Außenseite des Gehäusedeckels zumindest bereichsweise mindestens eine Dichtfläche angeordnet ist. Das erfindungsgemäße becherförmige Gehäuse und die erfindungsgemäße Vorrichtung weisen also zusätzlich eine an der Außenseite des Gehäusedeckels des becherförmigen Gehäuses angeordnete Dichtfläche auf.

Dies hat den Vorteil, dass im Gegensatz zum Stand der Technik der Flüssigkeitsablauf zum Ableiten der abgeschiedenen Flüssigkeit aus dem Innenraum des becherförmigen Gehäuses im Bereich der reinluftseitigen Öffnung des Gehäusedeckels erfolgen kann. Somit kann eine Luftentölbox mit platzsparendem Auslauf bereitgestellt werden. Im Gegensatz zum Stand der Technik muss also der Flüssigkeitsablauf nicht innerhalb eines mit dem becherförmigen Gehäuses verbundenen Nippels erfolgen und muss zum Bereitstellen des Flüssigkeitsablaufs kein Rohrelement im Nippel angeordnet werden.

Erfindungsgemäß ist die reinluftseitige Öffnung zum Aufnehmen eines sich durch den Gehäusedeckel in Richtung der Längsachse des becherförmigen Gehäuses erstreckenden Nippels ausgebildet. Ferner weist der Gehäusedeckel im Bereich der reinluftseitigen Öffnung zum lösbaren Verbinden des Gehäusedeckels mit dem Nippel mindestens einen mit dem Nippel lösbar verbindbaren Bereich auf, wobei die Dichtfläche derart am Gehäusedeckel angeordnet ist, dass im verbundenen Zustand des Gehäusedeckels mit dem Nippel die Dichtfläche zwischen Gehäusedeckel und Nippel angeordnet ist und den rohluftseitigen Rohlufteinlass von der reinluftseitigen Öffnung abdichtet. Alternativ kann die Dichtfläche auch derart am Gehäusedeckel angeordnet sein, dass im verbundenen Zustand des Gehäusedeckels mit dem Nippel die Dichtfläche zwischen Gehäusedeckel und einem mit dem Nippel verbundenen Anschlusskopf angeordnet ist und den rohluftseitigen Rohlufteinlass von der reinluftseitigen Öffnung abdichtet. Bei dem erfindungsgemäßen becherförmigen Gehäuse ist der Flüssigkeitsablauf reinluftseitig angeordnet und die Dichtfläche derart am Gehäusedeckel angeordnet, dass sie den Rohlufteinlass vom Flüssigkeitsablauf abdichtet.
Zum Ableiten der abgeschiedenen Flüssigkeit aus dem Innenraum des becherförmigen Gehäuses sind bei der vorliegenden Erfindung der Nippel und/oder das becherförmige Gehäuse, insbesondere der mit dem Nippel lösbar verbindbare Bereich des Gehäusedeckels, derart ausgebildet, dass im verbundenen Zustand des becherförmigen Gehäuses, insbesondere des Gehäusedeckels, mit dem Nippel zwischen dem becherförmigen Gehäuse, insbesondere dem Gehäusedeckel, und dem Nippel mindestens ein Flüssigkeitsablauf angeordnet ist. Die abgeschiedene Flüssigkeit kann also aus dem Innenraum des becherförmigen Gehäuses im verbundenen Zustand des Gehäusedeckels mit dem Nippel abgeleitet werden, ohne dass hierfür in den Nippel ein zusätzliches Rohrelement eingesteckt werden muss. So wird der Innendurchmesser des Nippels nicht durch ein eingestecktes zusätzliches Rohrelement eingeengt.

Stattdessen kann der Nippel im Anschluss an den mit dem becherförmigen Gehäuse lösbar verbindbaren Bereich des Nippels ein zylinderförmiges Rohrelement aufweisen, das zum Trennen der abgeschiedenen Flüssigkeit von der gereinigten Luft ausgebildet ist und einen Reinluftauslass zum Ableiten der gefilterten Reinluft aus dem becherförmigen Gehäuse bildet. Im Gegensatz zum Stand der Technik kann also der Nippel selbst als Reinluftauslass ausgebildet sein und im Wesentlichen denselben Innendurchmesser aufweisen, wie der mit dem becherförmigen Gehäuse lösbar verbindbare Bereich des Nippels. Im Vergleich zum Stand der Technik, bei dem der Reinluftauslass durch ein in den Nippel eingestecktes Rohrelement gebildet ist, ist bei der vorliegenden Erfindung der Innendurchmesser für den Reinluftauslass wesentlich größer, wodurch sich ein geringerer Differenzdruck ergibt und weniger Energie zum Abführen der gefilterten Reinluft benötigt wird.

Vorteilhafterweise erstreckt sich der Flüssigkeitsablauf in Richtung der Längsachse des becherförmigen Gehäuses, also axial, von der dem Innenraum des becherförmigen Gehäuses zugewandten Innenseite des Gehäusedeckels zur vom Innenraum des becherförmigen Gehäuses abgewandten Außenseite des Gehäusedeckels. Vorteilhafterweise ist der Flüssigkeitsablauf radial zwischen dem üblicherweise mittig angeordneten Reinluftauslass und dem außermittig angeordneten Rohlufteinlass angeordnet. Dabei können beispielsweise der Rohlufteinlass und/oder der Flüssigkeitsablauf durch mehrere kreisförmig regelmäßig oder unregelmäßig um den Reinluftauslass angeordnete Öffnungen oder Ausnehmungen gebildet sein.

Zum lösbaren Verbinden des becherförmigen Gehäuses mit dem Nippel können diese beispielsweise mittels einer Schraubverbindung oder mittels einer Bajonettverbindung miteinander verbunden werden. Der mit dem Nippel lösbar verbindbare Bereich des Gehäusedeckels kann also beispielsweise ein Innengewinde des Gehäusedeckels sein, das zum lösbaren Verbinden des becherförmigen Gehäuses mit dem Nippel mit einem Außengewinde des Nippels verschraubbar ist. Vorteilhafterweise ist bei dieser Ausführungsform also ein mit dem Gehäusedeckel lösbar verbindbarer Bereich des Nippels als Außengewinde ausgebildet.

Der Flüssigkeitsablauf kann durch eine Nut gebildet sein, die am mit dem Nippel lösbar verbindbaren Bereich des Gehäusedeckels, beispielsweise in dem Innengewinde des Gehäusedeckels, und /oder an dem mit dem Gehäusedeckel lösbar verbindbaren Bereich des Nippels, beispielsweise in dem Außengewinde des Nippels, angeordnet ist.

Dabei kann der Flüssigkeitsablauf eine geradlinig ausgebildete und sich in Richtung der Längsachse des becherförmigen Gehäuses erstreckende Nut sein.

Um einen vergrößerten Ablaufquerschnitt bereitzustellen, können mehrere der in den beiden vorherigen Absätzen beschriebenen Nuten regelmäßig oder unregelmäßig kreisförmig umlaufend angeordnet werden.

Alternativ kann der Flüssigkeitsablauf sich auch spiralartig von der dem Innenraum des becherförmigen Gehäuses zugewandten Innenseite des Gehäusedeckels zur vom Innenraum des becherförmigen Gehäuses abgewandten Außenseite des Gehäusedeckels erstrecken. Beispielsweise kann der Flüssigkeitsablauf durch eine vergrößerte Gewindetiefe des Innengewindes des Gehäusedeckels und/oder durch eine vergrößerte Gewindetiefe des Außengewindes des Nippels gebildet sein.

Alternativ ist der Flüssigkeitsablauf durch mindestens eine kanalartige Ausnehmung oder Bohrung im Gehäusedeckel gebildet, die sich bevorzugt axial erstreckt und weiter bevorzugt radial zwischen der mittig im Gehäusedeckel angeordneten reinluftseitigen Öffnung und mindestens einem außermittig im Gehäusedeckel angeordneten rohluftseitigen Rohlufteinlass angeordnet ist.

In einer bevorzugten Ausführungsform ist die Dichtfläche derart ringförmig zwischen Rohlufteinlass und Flüssigkeitsablauf am Gehäusedeckel angeordnet, dass sie den Rohlufteinlass vom Flüssigkeitsablauf abdichtet. So ergeben sich vorteilhaft zwei Druckniveaus, ein rohluftseitiges Druckniveau stromauf eines im becherförmigen Gehäuse angeordneten Filterelements und ein reinluftseitiges Druckniveau stromab des Filterelements auf der Seite des Reinluftraums, wobei Reinluftauslass und reinluftseitige Öffnung und Flüssigkeitsablauf in Verbindung mit dem Reinluftraum stehen und damit auch auf der Seite des reinluftseitigen Druckniveaus angeordnet sind.

Zum Abscheiden von Flüssigkeit aus Luft ist im becherförmigen Gehäuse mindestens ein als ringförmiger Coalescer ausgebildetes Filterelement angeordnet, das den Innenraum des becherförmigen Gehäuses in einen Rohluftraum und einen Reinluftraum unterteilt. Das Filterelement kann ein austauschbares Filterelement sein. Alternativ kann das Filterelement im Wartungsfall komplett mit dem becherförmigen Gehäuse ersetzt werden. Das Filterelement kann beispielsweise ein Filterelement eines sogenannten Spin-on-Filters sein. Das Filterelement kann mindestens ein Filtermedium aufweisen. Als Filtermedien können Glasfaser, etwa mehrfachgewickelte Glasfaser und/oder Vlies eingesetzt werden,

In einer bevorzugten Ausführungsform weist das Filterelement an einem dem Gehäusedeckel zugewandten Ende, insbesondere an der dort angeordneten Endscheibe, einen Flüssigkeitssammelraum auf, der mit dem Flüssigkeitsablauf verbindbar ist. Aus dem Flüssigkeitssammelraum kann die abgeschiedene Flüssigkeit durch den Flüssigkeitsablauf in den Sumpf der Kraftmaschine, beispielsweise des Kompressors, zurückgeführt werden.

Das Filterelement kann außerdem verwendet werden für Flüssigkeiten jedweder Art einer Kraftmaschine, insbesondere eines Kompressors, beispielsweise eines Druckluftkompressors, wie beispielsweise Öle, Kraftstoffe, Hydraulikflüssigkeiten oder auch Kühlmittel.

Zum Zuführen von Rohluft in das becherförmige Gehäuse weist der Gehäusedeckel mindestens einen rohluftseitigen Rohlufteinlass auf. Dieser Rohlufteinlass ist außermittig im Gehäusedeckel angeordnet. Bevorzugt ist zur Abdichtung des Rohlufteinlasses gegenüber der Umgebung eine äußere Dichtfläche oder Dichtung vorgesehen. Diese ist bevorzugt als axial gegenüber dem Anschlusskopf verpressbarer Dichtring ausgeführt und am Gehäusedeckel weiter bevorzugt den oder die Rohlufteinlässe umgebend angeordnet. Der Rohlufteinlass kann sich in axialer Richtung in einen mit dem Nippel lösbar verbundenen Anschlusskopf erstrecken. Der mit dem Nippel lösbar verbindbare Anschlusskopf kann ein separater Anschlussflansch sein oder auch direkt aus einer Komponente eines Druckluftkompressors, beispielsweise dem Gehäuse, gebildet sein.

Wie vorstehend beschrieben, erfolgt das Ableiten der Reinluft durch die Öffnung des Gehäusedeckels. Der Reinluftauslass zum Ableiten der gefilterten Reinluft aus dem becherförmigen Gehäuse ist durch den Nippel gebildet. Der Nippel ist vorzugsweise zentral im Gehäusedeckel angeordnet. Der Flüssigkeitsablauf ist der Reinluftseite der Vorrichtung zugeordnet. Zum Abdichten zwischen der Rohluftseite und der Reinluftseite, insbesondere zum Abdichten zwischen Flüssigkeitsablauf und Rohlufteinlass, ist der Gehäusedeckel an seiner vom Innenraum des becherförmigen Gehäuses abgewandten Außenseite zumindest bereichsweise als Dichtfläche ausgebildet. Unabhängig hiervon oder in Verbindung hiermit kann zum Abdichten zwischen der Rohluftseite und der Reinluftseite der Vorrichtung an der vom Innenraum des becherförmigen Gehäuses abgewandten Außenseite des Gehäusedeckels zumindest bereichsweise mindestens eine Dichtfläche angeordnet sein.

Gemäß einer vorteilhaften Ausführungsform der Erfindung kann die Dichtfläche durch eine Fläche des Gehäusedeckels gebildet sein. In diesem Fall ist also der Gehäusedeckel selbst an seiner vom Innenraum des becherförmigen Gehäuses abgewandten Außenseite zumindest bereichsweise als Dichtfläche ausgebildet. Eine aus dem Gehäusedeckel gebildete Dichtfläche ist vorteilhaft, da sie nicht verrutschen oder verloren gehen kann.

Beispielsweise kann die Dichtfläche durch eine Metallfläche des Gehäusedeckels gebildet sein. Dies hat den Vorteil, dass die Dichtfläche temperaturunempfindlich und langlebig ist. Diese Dichtfläche kann derart mit einer Metallfläche des Nippels oder einer Metallfläche eines Sockels oder eines Anschlusskopfs zusammenwirken, dass eine Abdichtung zwischen der Rohluftseite und der Reinluftseite erfolgt. Es kann also auch ohne extra Dichtung gedichtet werden, indem zwei Metallflächen dichtend miteinander in Kontakt stehen. Insbesondere kann der Gehäusedeckel, beispielsweise eine Gewindeplatte des Gehäusedeckels, dichtend auf dem Nippel aufliegen. Ergänzend oder alternativ hierzu kann der Gehäusedeckel, beispielsweise eine Gewindeplatte des Gehäusedeckels, dichtend auf dem Anschlusskopf, beispielsweise einem Filterkopf, aufliegen.

Alternativ oder ergänzend zu einer aus einem Bereich des Gehäusedeckels gebildeten Dichtfläche kann die Dichtfläche durch mindestens eine am Gehäusedeckel angeordnete Dichtung, beispielsweise durch eine Kunststoffdichtung gebildet sein. Zur Befestigung am Gehäusedeckel kann die Kunststoffdichtung mittels mindestens eines Spritzverfahrens an den Gehäusedeckel und/oder an den Nippel angespritzt werden. Alternativ kann die Dichtfläche auch an den Gehäusedeckel und/oder an den Nippel angeklipst, angeklemmt oder angeklebt werden.

Zum Anklipsen oder Anklemmen an den Gehäusedeckel kann die Dichtfläche eine Dichtung sein mit mindestens einem sich in Richtung der Längsachse des becherförmigen Gehäuses erstreckenden Fixierelement. Ist der mit dem Nippel lösbar verbindbare Bereich des Gehäusedeckels derart ausgebildet, dass im verbundenen Zustand des Gehäusedeckels mit dem Nippel zwischen Gehäusedeckel und Nippel mehrere Flüssigkeitsabläufe zum Ableiten der abgeschiedenen Flüssigkeit aus dem Innenraum des becherförmigen Gehäuses angeordnet sind, so kann das Fixierelement dazu ausgebildet sein derart am Gehäusedeckel angeordnet zu werden, dass es sich durch einen der Flüssigkeitsabläufe erstreckt und auf diese Weise die Dichtung am Gehäusedeckel fixiert,

Die Dichtfläche kann ringförmig oder zylinderförmig ausgebildet sein, beispielsweise eine ringförmige oder zylinderförmige Dichtung sein.

Die Dichtfläche ist vorteilhafterweise zum Abdichten zwischen Gehäusedeckel und Nippel ausgebildet. Die Dichtfläche oder Dichtung liegt dabei in axialer Richtung dichtend an dem Nippel oder an einer korrespondierenden Fläche des Anschlusskopfes an. Beispielsweise kann die Dichtfläche in axialer Richtung zwischen dem becherförmigem Gehäuse und einem sich radial, also sich senkrecht zur Längsrichtung (axialen Richtung) des becherförmigen Gehäuses erstreckenden Vorsprung, beispielsweise einem Kragen, des Nippels angeordnet sein. Dieser radiale Vorsprung liegt vorteilhafterweise axial abdichtend am Anschlusskopf der Kraftmaschine an, wenn der Nippel mit dem Anschlusskopf verbunden ist. Der Flüssigkeitsablauf kann sich in der axialen Verlängerung des Verbindungsbereichs des Gehäusedeckels mit dem Nippel durch den Kragen des Nippels erstrecken. Der Rohlufteinlass ist vorzugsweise an der vom Nippel abgewandten Außenseite des Kragens angeordnet. Dieser Rohlufteinlass kann sich in axialer Richtung in den Anschlusskopf der Kraftmaschine erstrecken. Zum Abdichten zwischen der Rohluftseite und der Reinluftseite wirkt bei diesem Ausführungsbeispiel die Dichtfläche im verbundenen Zustand des becherförmigen Gehäuses, insbesondere des Gehäusedeckels, mit dem Nippel derart mit dem Kragen des Nippels zusammen, dass eine Abdichtung zwischen dem Rohlufteinlass und dem Flüssigkeitsablauf erfolgt,

### Kurze Beschreibung der Zeichnungen

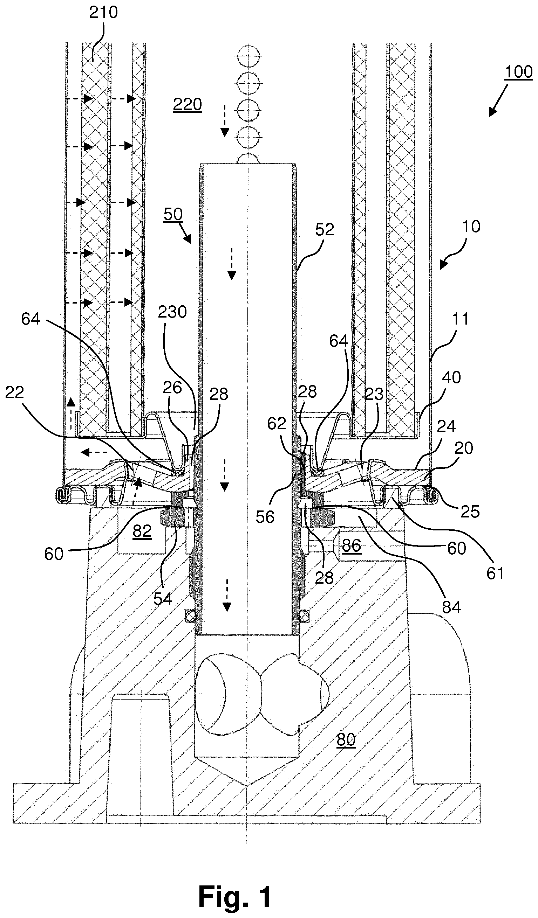

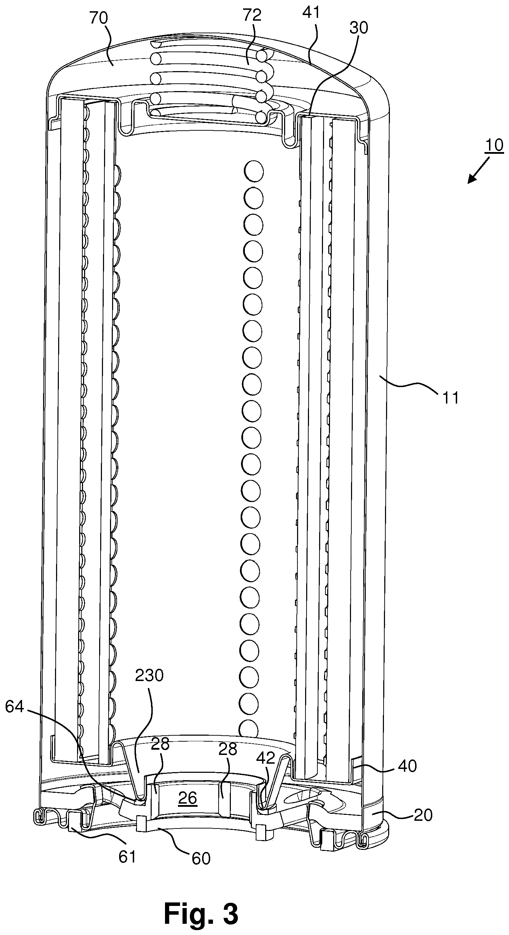

Wie bereits vorstehend erörtert, gibt es verschiedene Möglichkeiten, die Lehre der vorliegenden Erfindung in vorteilhafter Weise auszugestalten und weiterzubilden. Hierzu wird einerseits auf die dem Anspruch 1 sowie dem Anspruch 16 nachgeordneten Ansprüche verwiesen, andererseits werden weitere Ausgestaltungen, Merkmale und Vorteile der vorliegenden Erfindung nachstehend unter anderem anhand der durch die Figuren 1 bis 7 veranschaulichten beiden Ausführungsbeispiele näher erläutert.
Es zeigt:
Fig. 1 in schematischer Schnittdarstellung ein erstes Ausführungsbeispiel einer Vorrichtung gemäß der vorliegenden Erfindung mit einem becherförmigen Gehäuse gemäß der vorliegenden Erfindung, das nach dem Verfahren gemäß der vorliegenden Erfindung montiert ist;
Fig. 2 in schematischer Schnittdarstellung das becherförmige Gehäuse der Vorrichtung aus Figur 1 mit einem zweiten Ausführungsbeispiel einer Dichtung;
Fig. 3 in perspektivischer Schnittdarstellung das becherförmige Gehäuse der Vorrichtung aus Figur 2;
Fig. 4 in isometrischer Darstellung das becherförmige Gehäuse der Vorrichtung aus Figur 1;
Fig. 5 in isometrischer Darstellung den Nippel der Vorrichtung aus Figur 1;
Fig. 6 in isometrischer Darstellung ein zweites Ausführungsbeispiel eines Nippels für eine Vorrichtung gemäß der vorliegenden Erfindung;
Fig. 7 in isometrischer Darstellung eine Detaildarstellung der Dichtung des becherförmigen Gehäuses aus Figur 2 und Figur 3;
Fig. 8 in isometrischer Darstellung die Dichtung der Vorrichtung aus Figur 1;
Fig. 9 in schematischer Schnittdarstellung die Vorrichtung aus Figur 1 mit einem Ausführungsbeispiel einer Dichtung; und
Fig. 10 eine Draufsicht einer alternativen Ausführung des Gehäusedeckels des becherförmigen Gehäuses aus Figur 3.

Gleiche oder ähnliche Ausgestaltungen, Elemente oder Merkmale sind in den Fig. 1 bis 9 mit identischen Bezugszeichen versehen

### Ausführungsform(en) der Erfindung

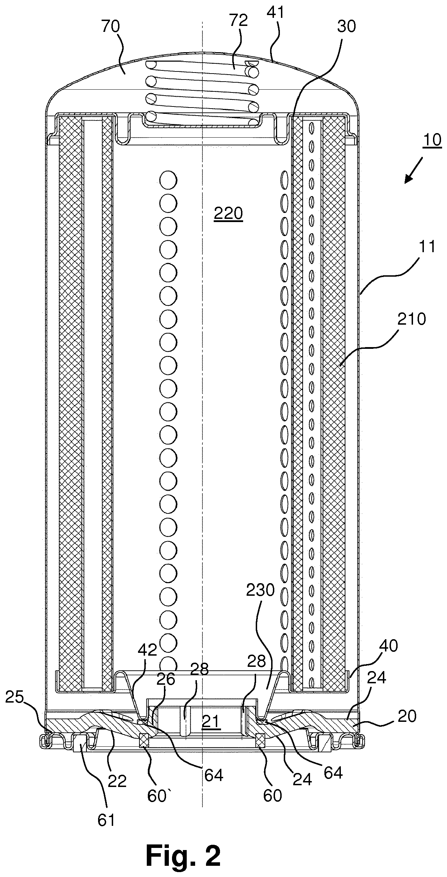

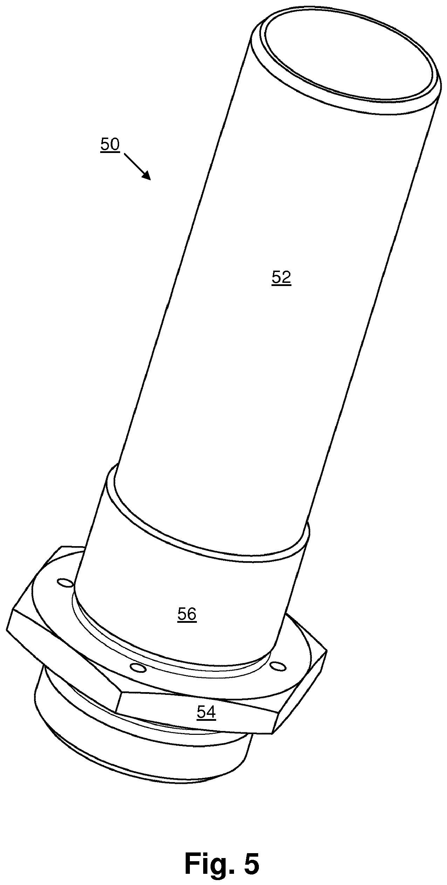

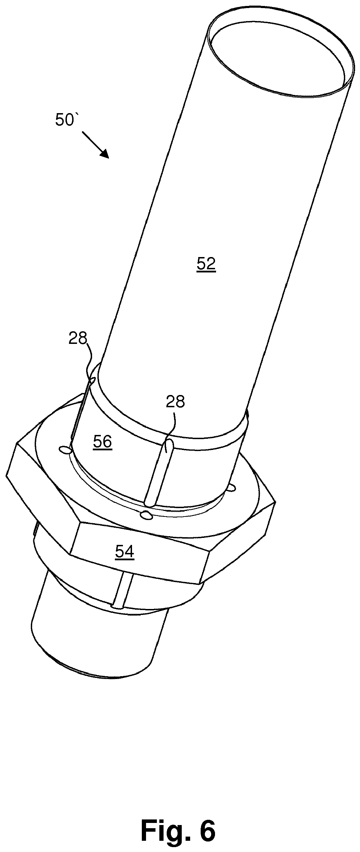

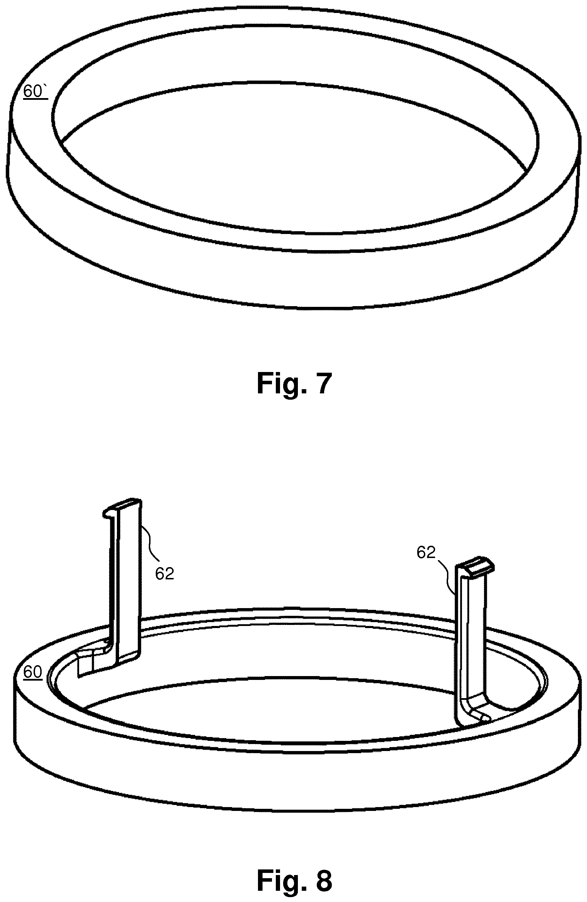

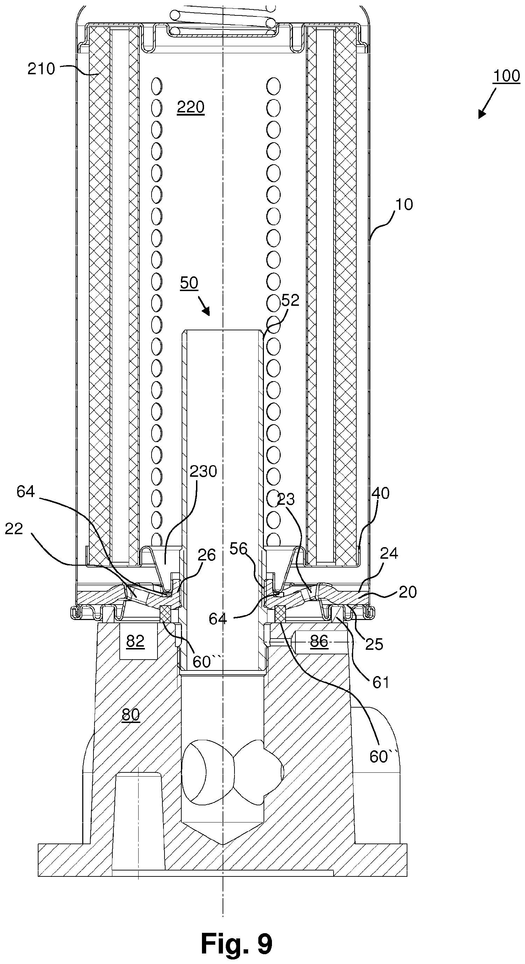

Zur Vermeidung überflüssiger Wiederholungen beziehen sich die nachfolgenden Erläuterungen hinsichtlich der Ausgestaltungen, Merkmale und Vorteile der vorliegenden Erfindung (soweit nicht anderweitig angegeben) sowohl auf das in den Figuren 1 und 5 dargestellte erste Ausführungsbeispiel eines Nippels für eine Vorrichtung gemäß der vorliegenden Erfindung als auch auf das in Figur 6 dargestellte zweite Ausführungsbeispiel eines Nippels für eine Vorrichtung gemäß der vorliegenden Erfindung sowie sowohl auf das in den Figuren 1 und 8 dargestellte erste Ausführungsbeispiel einer Dichtung für eine Vorrichtung gemäß der vorliegenden Erfindung als auch auf das in den Figuren 2, 3 und 7 dargestellte zweite Ausführungsbeispiel einer Dichtung für eine Vorrichtung gemäß der vorliegenden Erfindung als auch auf das in Figur 9 dargestellte dritte Ausführungsbeispiel einer Dichtung für eine Vorrichtung gemäß der vorliegenden Erfindung.

Im anhand der Fig. 1 bis 6 veranschaulichten ersten Ausführungsbeispiel der vorliegenden Erfindung ist eine Vorrichtung 100, beispielsweise ein Ölabscheider oder ein Kraftstoffilter, zum Abscheiden von Flüssigkeit aus Luft gezeigt. Die Vorrichtung 100 hat ein becherförmiges Gehäuse 10 mit darin angeordnetem als ringförmiger Coalescer ausgebildetem Filterelement, beispielsweise einem sogenannten Spin-on Filter. Als Filtermedium weist das Filterelement Glasfaser 210 auf, die mehrfach ringförmig gewickelt und durch zwei Endscheiben 30, 40 begrenzt ist. ist. Als weiteres Filtermedium ist im Inneren der Glasfaserwicklung 210 Vlies 220 angeordnet.

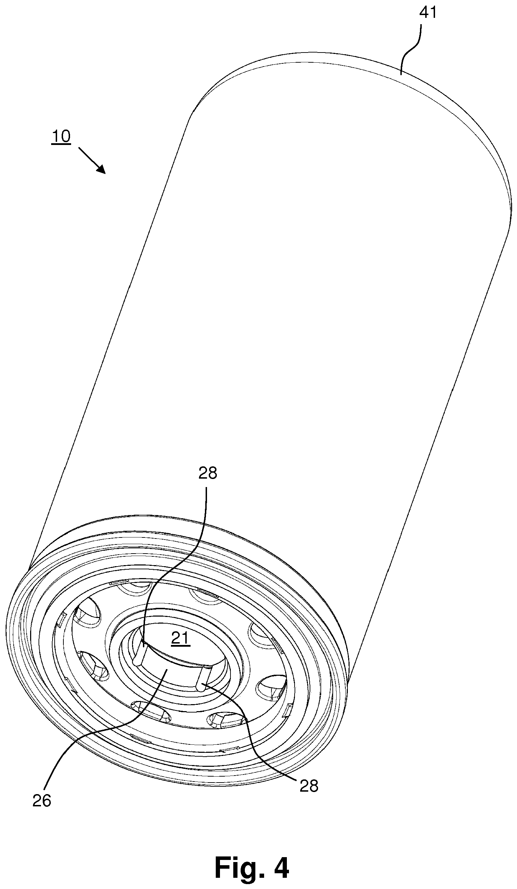

Der Grundkörper des becherförmigen Gehäuses wird bevorzugt durch einen beispielsweise tiefgezogenen Gehäusetopf 11 mit einem Gehäuseboden 41 gebildet, der eine offene Stirnseite aufweist. Zum Verschließen seiner offenen Stirnseite weist das becherförmige Gehäuse 10 einen Gehäusedeckel 20 auf. Dieser Gehäusedeckel 20 weist zum Abführen der gefilterten Reinluft eine Öffnung 21 (vgl. Figur 4) auf.

Diese Öffnung 21 ist mittig im Gehäusedeckel 20 angeordnet.

Der die Öffnung umgebende Bereich des Gehäusedeckels 20 ist im Wesentlichen zylinderförmig, insbesondere kreiszylinderförmig, beispielsweise als Ringkragen des Gehäusedeckels, ausgebildet.

In der Öffnung 21 ist ein sich durch den Gehäusedeckel 20 in Richtung der Längsachse des becherförmigen Gehäuses 10 erstreckender Nippel 50 aufgenommen. Der Gehäusedeckel ist lösbar mit dem Nippel 50 verbindbar.

Der mit dem Nippel 50 lösbar verbindbare Bereich 26 des Gehäusedeckels 20 ist derart ausgebildet, dass im verbundenen Zustand des Gehäusedeckels 20 mit dem Nippel 50 zwischen Gehäusedeckel 20 und Nippel 50 mindestens ein Flüssigkeitsablauf 28, etwa ein Öldurchlaufkanal bzw. Verbindungskanal, zum Ableiten der abgeschiedenen Flüssigkeit aus dem Innenraum 70 des becherförmigen Gehäuses 10 angeordnet ist.

Wie in den Figuren 1 bis 5 gezeigt, kann der Flüssigkeitsablauf 28 durch mindestens eine sich in axialer Richtung von der dem Innenraum 70 des becherförmigen Gehäuses 10 zugewandten Innenseite 24 des Gehäusedeckels 20 zur vom Innenraum 70 des becherförmigen Gehäuses 10 abgewandten Außenseite 25 des Gehäusedeckels 20 erstreckende Nut bzw. kanalartige Ausnehmung 28 des mit dem Nippel 50 verbindbaren Bereichs 26 des Gehäusedeckels 20, beispielsweise eines Innengewindes des Gehäusedeckels 20 gebildet sein.

Alternativ zur Nut 28 im mit dem Nippel 50 verbindbaren Bereich 26 des Gehäusedeckels 20 oder in Ergänzung zur Nut 28 im mit dem Nippel 50 verbindbaren Bereich 26 des Gehäusedeckels 20 kann, wie in Figur 6 gezeigt, der Flüssigkeitsablauf 28 durch mindestens eine sich in axialer Richtung von einem dem Innenraum 70 des becherförmigen Gehäuses 10 zugewandten inneren Bereich des Nippels 50' zu einem vom Innenraum 70 des becherförmigen Gehäuses 10 abgewandten äußeren Bereich des Nippels 50' erstreckende Nut bzw. kanalartige Ausnehmung 28 des Nippels 50' gebildet sein. Diese am Nippel 50' angeordnete Nut 28 kann beispielsweise in einem Außengewindes des Nippels 50' angeordnet sein.

Der Flüssigkeitsablauf 28 kann also beispielsweise durch eine in einem Gewinde (nicht dargestellt) des Gehäusedeckels 20 und/oder in einem Gewinde des (nicht dargestellt) Nippels 50' angeordnete Ablaufnut gebildet werden.

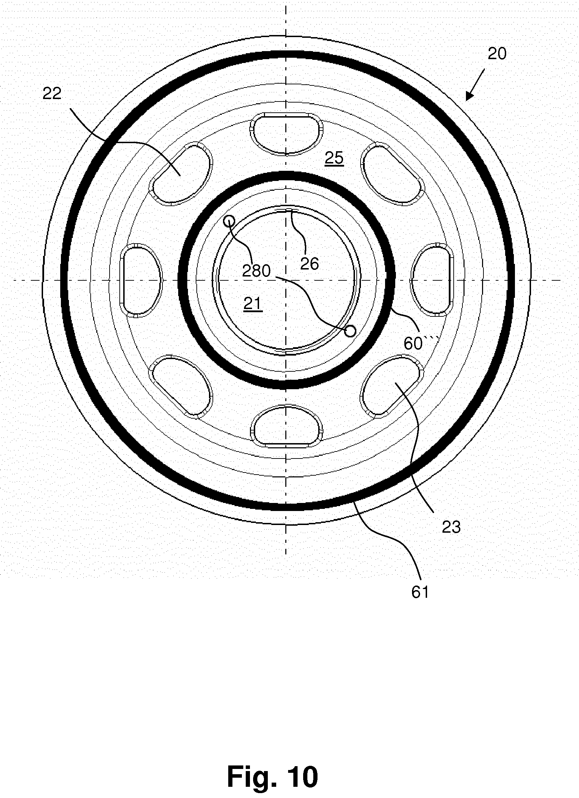

Alternativ kann auch - wie in Figur 10 dargestellt - der Flüssigkeitsablauf durch mindestens eine Durchgangsbohrung 280 ausgeführt sein, die sich in axialer Richtung von der dem Innenraum 70 des becherförmigen Gehäuses 10 zugewandten Innenseite 24 des Gehäusedeckels 20 zur vom Innenraum 70 des becherförmigen Gehäuses 10 abgewandten Außenseite 25 des Gehäusedeckels 20 durch den Gehäusedeckel 20 erstreckt.

Alternativ zu einer Schraubverbindung kann der Nippel 50, 50' auch mittels einer Bajonettverbindung mit dem Gehäusedeckel 20 verbunden werden.

Der Flüssigkeitsablauf 28 ermöglich zwischen Nippel und Gehäusedeckel eine permanente Entleerung im vollständig verbundenen, beispielsweise angeschraubten, Zustand von Nippel 50, 50' und Gehäusedeckel 20.

Der Flüssigkeitsablauf 28 ist der Reinluftseite des becherförmigen Gehäuses 10 zugeordnet. Die Flüssigkeit sammelt sich im Flüssigkeitssammelraum 230, der bevorzugt als Vertiefung in der stirnseitigen, offenen Endscheibe 40 des Filterelements 210, 220 ausgeführt ist und zumindest teilweise durch die Ringsicke 42 gebildet sein kann.

Zum Ablassen der abgeschiedenen Flüssigkeit ist der Flüssigkeitsablauf 28 mit einem Ablasskanal 86 des Anschlusskopfs 80 verbunden.

Zum Zuführen von Rohluft in das becherförmige Gehäuse 10 weist der Gehäusedeckel 20 mindestens einen außermittig angeordneten Rohlufteinlass 22, 23 auf. Der Strömungsverlauf der Luft ist in Fig. 1 mittels gestrichelten Pfeilen dargestellt. Aus Gründen der Übersichtlichkeit sind die Pfeile nur in der linken Bildhälfte eingezeichnet. Zur Abdichtung der Rohluftseite gegenüber der Umgebung ist eine Dichtung 61 vorgesehen, die axial gegenüber dem Anschlusskopf oder Sockel 80 dichtend anleg- und verpressbar ist. Diese ist üblicherweise als Ringdichtung ausgeführt und am Gehäusedeckel 20 befestigt.

Mit Abstand zum Gehäusedeckel 20 ist am Nippel 50, 50' ein sich in radialer Richtung erstreckender Kragen 54 angeordnet. Zwischen Gehäusedeckel und Kragen erstreckt sich eine Dichtung 60 und dichtet den Rohlufteinlass 22, 23 vom Flüssigkeitsablauf 28 ab.

Alternativ kann, wie in Figur 9 gezeigt, die Abdichtung auch direkt zwischen Gehäusedeckel 20 und Anschlusskopf oder Sockel 80 erfolgen. Um den Rohlufteinlass 22, 23 vom Flüssigkeitsablauf 28 abzudichten, kann sich die Dichtung 60"' also auch zwischen Gehäusedeckel 20 und Anschlusskopf 80 erstrecken. Dabei kann, wie in Figur 9 gezeigt, der Nippel auch ohne radialen Kragen ausgebildet sein.

Die Dichtung 60 kann, wie in Fig. 1 gezeigt, eine sich in Richtung der Längsachse des becherförmigen Gehäuses 10 erstreckende Fixiernase zum Festklemmen der Dichtfläche 60 am Gehäusedeckel aufweisen. Dabei ist die Fixiernase 62 in einen Flüssigkeitsablauf 28 angeordnet.

Alternativ kann, wie in den Figuren 2, 3, 7 und 9 gezeigt, die Dichtung 60 auch eine herkömmliche Ringdichtung sein.

Neben der an der vom Innenraum 70 des becherförmigen Gehäuses 10 abgewandten Außenseite 26 des Gehäusedeckels 20 angeordneten Dichtfläche 60 weist das becherförmige Gehäuse 10 zur Abdichtung zwischen Flüssigkeitsablauf 28 und Rohlufteinlass 22 des Weiteren mindestens eine an der dem Innenraum 70 des becherförmigen Gehäuses 10 zugewandten Innenseite 24 des Gehäusedeckels 20 angeordnete Dichtung 64 auf. Konkret ist diese weitere Dichtung 64 im vorliegenden Ausführungsbeispiel zwischen einer Ringsicke 42 einer stirnseitigen Endscheibe 40 des becherförmigen Gehäuses und der Innenseite 24 des Gehäusedeckels 20, angeordnet.

Zum Ableiten der Reinluft aus dem becherförmigen Gehäuse 10 weist der Nippel 50 bzw. 50' einen zentralen Reinluftauslass 52 auf, der einstückig mit dem Nippel 50 bzw. 50' ausgebildet ist (vgl. Fig. 1, 5, 6). Der Reinluftauslass 52 reicht in das Filterelement 210, 220, insbesondere in etwa bis in die Mitte des Filterelements 210, 220, hinein.

An der vom becherförmigen Gehäuse 10 abgewandten Seite des Nippels ist dieser mit einem Anschlusskopf 80 zum Anschliessen der Vorrichtung 100 an eine Komponente einer Kraftmaschine lösbar verbindbar.

Im Unterschied zum Stand der Technik besteht der Nippel 50 bzw. 50'also nur aus einem Teil anstatt, wie üblich, aus dem Nippel und einem eingesteckten zusätzlichen Rohr zur Bereitstellung eines Ringspalts für den Flüssigkeitsablauf. Im Unterschied zum Stand der Technik gibt es bei dem in den Figuren 1 bis 9 gezeigten Ausführungsbeispiel der vorliegenden Erfindung keinen Dichtsitz und O-Ring im zugehörigen Spin-On-Filter, Hierdurch ergibt sich ein weiterer Kostenvorteil. Um dennoch eine Abdichtung zwischen Rücklauf und Rohseite zu erreichen, gibt es eine zusätzliche Dichtfläche 60, 60', 60", beispielsweise eine Kunststoffdichtung.

### Bezugszeichenliste

- 10: becherförmiges, insbesondere haubenförmiges oder kreiszylindrisches, Gehäuse der Vorrichtung 100, insbesondere Luftentölbox, beispielsweise Gehäuse eines Spin-on Filters
- 11: Gehäusetopf als Grundkörper des becherförmigen Gehäuses 10
- 20: Gehäusedeckel, des becherförmigen Gehäuses 10, der den Gehäusetopf 11 verschließt
- 21: Öffnung des Gehäusedeckels 20, insbesondere zentral angeordnete Öffnung des Gehäusedeckels 20
- 22: erster Rohlufteinlass, insbesondere erster dezentraler Kanal, des Gehäusedeckels 20 zum Zuströmen von Rohluft
- 23: weiterer Rohlufteinlass, insbesondere weiterer dezentraler Kanal, des Gehäusedeckels 20 zum Zuströmen von Rohluft
- 24: dem Innenraum 70 des becherförmigen Gehäuses 10 zugewandte Innenseite des Gehäusedeckels
- 25: vom Innenraum 70 des becherförmigen Gehäuses 10 abgewandte Außenseite des Gehäusedeckels
- 26: mit dem Nippel 50 bzw. 50' lösbar verbindbarer Bereich, insbesondere Innengewinde, beispielsweise eines Ringkragens, des Gehäusedeckels 20
- 28: zwischen Gehäusedeckel 20 und Nippel 50 bzw. 50' angeordneter Flüssigkeitsablauf, insbesondere Ablaufnut oder spiralförmige Ausnehmung im mit dem Nippel 50 bzw. 50'verbindbaren Bereich 26 des Gehäusedeckels 20, beispielsweise Ablaufnut oder spiralförmige Ausnehmung im Innengewinde des Gehäusedeckels 20, etwa tiefer geschnittenes Gewinde des Gehäusedeckels 20 und/oder Ablaufnut oder spiralförmige Ausnehmung im mit dem Gehäusedeckel 20 verbindbaren Bereich 56 des Nippels 50', beispielsweise Ablaufnut oder spiralförmige Ausnehmung im Außengewinde des Nippels 50', etwa tiefer geschnittenes Gewinde des Nippels 50'
- 280: zwischen Gehäusedeckel 20 und Nippel 50 bzw. 50' angeordneter Flüssigkeitsablauf, der als mindestens eine Durchgangsbohrung durch den Gehäusedeckel 20 ausgeführt ist
- 30: Fußseitige Endscheibe des becherförmigen Filterelements
- 40: stirnseitige Endscheibe des becherförmigen Filterelements
- 41: geschlossener Gehäuseboden des becherförmigen Gehäuses 10
- 42: Ringsicke der stirnseitigen Endscheibe 40
- 50: Nippel zum lösbaren Verbinden des becherförmigen Gehäuses 10 mit einem Anschlusskopf 80 einer Kraftmaschine, insbesondere eines Kompressors, beispielsweise eines Druckluftkompressors, insbesondere axialer Anschraubnippel, beispielsweise Rohrstutzen, etwa Gewinderohrstutzen (erstes Ausführungsbeispiel vgl. Fig. 1 und 5)
- 50': Nippel zum lösbaren Verbinden des becherförmigen Gehäuses 10 mit einem Anschlusskopf 80 einer Kraftmaschine, insbesondere axialer Anschraubnippel, beispielsweise Rohrstutzen, etwa Gewinderohrstutzen (zweites Ausführungsbeispiel vgl. Fig. 6)
- 52: Reinluftauslass des Nippels 50 bzw. 50' zum Ableiten der Reinluft aus dem becherförmigen Gehäuse 10, insbesondere zentraler Kanal zum Abströmen von Reinluft
- 54: radialer Vorsprung, insbesondere Kragen, des Nippels 50 bzw 50'
- 56: mit dem becherförmigen Gehäuse 10, insbesondere mit dem Gehäusedeckel 20, lösbar verbindbarer Bereich, beispielsweise Außengewinde des Nippels 50 bzw 50'
- 60: Dichtfläche, insbesondere Dichtung, beispielsweise ringförmige Dichtung (erstes Ausführungsbeispiel vgl. Fig. 1 und Fig. 8), angeordnet an der vom Innenraum 70 des becherförmigen Gehäuses 10 abgewandten Außenseite 26 des Gehäusedeckels 20
- 60': Dichtfläche, insbesondere Dichtung, beispielsweise ringförmige Dichtung (zweites Ausführungsbeispiel vgl. Fig.2, 3, 7)
- 60": Dichtfläche, insbesondere Dichtung, beispielsweise ringförmige Dichtung (drittes Ausführungsbeispiel vgl. Fig. 9)
- 61: äußere Dichtfläche, insbesondere Dichtung, beispielsweise ringförmige zweite Dichtung (alle Ausführungsbeispiele) zur Abdichtung der Rohseite bzw. des Rohlufteinlasses gegenüber der Umgebung
- 62: Fixierelement, beispielsweise sich in Richtung der Längsachse des becherförmigen Gehäuses 10 erstreckende Fixiernase zum Festklemmen der Dichtfläche 60 am Gehäusedeckel 20
- 64: an der dem Innenraum 70 des becherförmigen Gehäuses 10 zugewandte Innenseite 24 des Gehäusedeckels 20 angeordnete Dichtung zur Abdichtung zwischen Flüssigkeitsablauf 28 und Rohlufteinlass 22
- 70: Innenraum des becherförmigen Gehäuses 10
- 72: Feder, beispielsweise Schraubendruckfeder
- 80: Anschlusskopf, insbesondere Aufnahmekopf oder Abscheiderkopf oder Aufnahmeflansch, zum Anschliessen der Vorrichtung 100 an eine Komponente einer Kraftmaschine, insbesondere eines Kompressors, beispielsweise eines Druckluftkompressors
- 82: erster Rohlufteinlass, insbesondere erster zum Zuströmen von Rohluft ausgebildeter dezentraler Kanal, des Anschlusskopfs 80
- 84: weiterer Rohlufteinlass, insbesondere weiterer zum Zuströmen von Rohluft ausgebildeter dezentraler Kanal, des Anschlusskopfs 80
- 86: Ablasskanal des Anschlusskopfs 80 zum Ablassen der abgeschiedenen Flüssigkeit
- 100: Vorrichtung, insbesondere Filtersystem, zum Abscheiden von Flüssigkeit, insbesondere von aus Flüssigkeit gebildetem Aerosol, aus Luft, wobei die Flüssigkeit beispielsweise Öl, Kraftstoff, Hydraulikflüssigkeit oder Kühlmittel sein kann
- 210: erstes Filtermedium des als ringförmiger Coalescer ausgebildeten Filter-elements, insbesondere mehrfach gewickelte Glasfaser
- 220: weiteres Filtermedium des als ringförmiger Coalescer ausgebildeten Filter-elements, insbesondere Vlies
- 230: Flüssigkeitssammelraum im Inneren des Filterelements

## Patentansprüche

1. Vorrichtung (100) zum Abscheiden von Flüssigkeit aus Luft, aufweisend
ein becherförmiges Gehäuse (10) mit darin angeordnetem als insbesondere ringförmiger Coalescer ausgebildetem Filterelement (210, 220) und
einen Nippel (50; 50'), der mit einem Anschlusskopf (80) einer Kraftmaschine, insbesondere eines Kompressors, beispielsweise eines Druckluftkompressors, verbindbar ist, und der mit dem becherförmigen Gehäuse (10) lösbar verbunden ist,
wobei das becherförmige Gehäuse (10) zur Aufnahme mindestens des als insbesondere ringförmiger Coalescer ausgebildeten Filterelements (210, 220) zum Abscheiden von Flüssigkeit aus Luft ausgebildet ist und wobei das becherförmige Gehäuse (10) zum Verschließen seiner offenen Stirnseite einen Gehäusedeckel (20) aufweist,
wobei der Gehäusedeckel (20) zum Abführen der gefilterten Reinluft mindestens eine mittig angeordnete reinluftseitige Öffnung (21) aufweist und
wobei der Gehäusedeckel (20) zum Zuführen von Rohluft mindestens einen außermittig angeordneten rohluftseitigen Rohlufteinlass (22, 23) aufweist,
wobei zum Abdichten zwischen der Rohluftseite und der Reinluftseite, insbesondere des rohluftseitigen Rohlufteinlasses (22, 23) von der reinluftseitigen Öffnung (21), an der vom Innenraum (70) des becherförmigen Gehäuses (10) abgewandten Außenseite (25) des Gehäusedeckels (20) zumindest bereichsweise mindestens eine Dichtfläche (60; 60'; 60") angeordnet ist,
wobei die reinluftseitige Öffnung (21) zum Aufnehmen des sich durch den Gehäusedeckel (20) in Richtung der Längsachse des becherförmigen Gehäuses (10) erstreckenden Nippels (50; 50') ausgebildet ist und
wobei der Gehäusedeckel (20) im Bereich der reinluftseitigen Öffnung (21) mindestens einen mit dem Nippel (50; 50') lösbar verbindbaren Bereich (26) aufweist, wobei die Dichtfläche (60; 60'; 60") derart am Gehäusedeckel (20) angeordnet ist, dass im verbundenen Zustand des Gehäusedeckels (20) mit dem Nippel (50; 50') die Dichtfläche (60; 60'; 60") zwischen Gehäusedeckel (20) und Nippel (50; 50') oder zwischen Gehäusedeckel (20) und einem mit dem Nippel (50; 50') verbundenen Anschlusskopf (80) angeordnet ist und den rohluftseitigen Rohlufteinlass (22, 23) von der reinluftseitigen Öffnung (21) abdichtet,
**dadurch gekennzeichnet, dass**
i. der Nippel derart ausgebildet ist, dass im verbundenen Zustand des Gehäusedeckels (20) mit dem Nippel (50; 50') zwischen Gehäusedeckel (20) und Nippel (50; 50') mindestens ein reinluftseitig angeordneter Flüssigkeitsablauf (28, 280) zum Ableiten der abgeschiedenen Flüssigkeit aus dem Innenraum (70) des becherförmigen Gehäuses (10) angeordnet ist, oder
ii. das becherförmige Gehäuse, insbesondere der mit dem Nippel (50; 50') lösbar verbindbare Bereich (26) des Gehäusedeckels (20) derart ausgebildet ist, dass im verbundenen Zustand des Gehäusedeckels (20) mit dem Nippel (50; 50') zwischen Gehäusedeckel (20) und Nippel (50; 50') mindestens ein reinluftseitig angeordneter Flüssigkeitsablauf (28, 280) zum Ableiten der abgeschiedenen Flüssigkeit aus dem Innenraum (70) des becherförmigen Gehäuses (10) angeordnet ist, oder
iii. ein Flüssigkeitsablauf durch mindestens eine Durchgangsbohrung (280) ausgeführt ist, die radial zwischen der reinluftseitigen Öffnung (21) und dem Rohlufteinlass (22, 23) angeordnet ist und sich in axialer Richtung von der dem Innenraum (70) des becherförmigen Gehäuses (10) zugewandten Innenseite (24) des Gehäusedeckels (20) zur vom Innenraum (70) des becherförmigen Gehäuses (10) abgewandten Außenseite (25) des Gehäusedeckels (20) durch den Gehäusedeckel (20) erstreckt,
ferner **gekennzeichnet dadurch, dass** die Dichtfläche (60; 60'; 60") derart am Gehäusedeckel (20) angeordnet ist, dass sie (60; 60'; 60") den Rohlufteinlass (22, 23) vom Flüssigkeitsablauf (28) abdichtet.

2. Vorrichtung gemäß Anspruch 1, **dadurch gekennzeichnet, dass** die Dichtfläche durch eine Fläche des Gehäusedeckels (20), beispielsweise durch eine Metallfläche des Gehäusedeckels (20), gebildet ist.

3. Vorrichtung gemäß Anspruch 1 oder 2, **dadurch gekennzeichnet, dass** die Dichtfläche durch mindestens eine am Gehäusedeckel (20) angeordnete Dichtung, beispielsweise durch einen Dichtring, der die reinluftseitige Öffnung (21) umgibt, gebildet ist.

4. Vorrichtung gemäß mindestens einem der vorhergehenden Ansprüche, **dadurch gekennzeichnet, dass** die Dichtfläche (60, 60') so ausgelegt ist, dass im verbundenen Zustand des Gehäusedeckels (20) mit dem Nippel (50; 50') die Dichtfläche (60; 60') derart mit einem radialen Vorsprung (54) des Nippels (50; 50') oder einer korrespondierenden Dichtfläche eines Anschlusskopfes (80) zusammenwirkt, dass die reinluftseitige Öffnung (21) vom rohluftseitigen Rohlufteinlass (22, 23) abgedichtet ist.

5. Vorrichtung gemäß mindestens einem der vorhergehenden Ansprüche, **dadurch gekennzeichnet, dass** der Flüssigkeitsablauf (28, 280) sich in Richtung der Längsachse des becherförmigen Gehäuses (10) von der dem Innenraum (70) des becherförmigen Gehäuses (10) zugewandten Innenseite (24) des Gehäusedeckels (20) zur vom Innenraum (70) des becherförmigen Gehäuses (10) abgewandten Außenseite (25) des Gehäusedeckels (20) erstreckt.

6. Vorrichtung gemäß mindestens einem der vorhergehenden Ansprüche, bei welcher (i) der Nippel oder (ii) das becherförmige Gehäuse derart ausgebildet sind, dass im verbundenen Zustand des Gehäusedeckels (20) mit dem Nippel (50; 50') zwischen Gehäusedeckel (20) und Nippel (50; 50') mindestens ein reinluftseitig angeordneter Flüssigkeitsablauf (28, 280) zum Ableiten der abgeschiedenen Flüssigkeit aus dem Innenraum (70) des becherförmigen Gehäuses (10) angeordnet ist, **dadurch gekennzeichnet, dass** der Flüssigkeitsablauf (28, 280) durch mindestens eine Nut oder mindestens eine kanalartige Ausnehmung gebildet ist, die am mit dem Nippel (50; 50') lösbar verbindbaren Bereich (26) des Gehäusedeckels (20) und/ oder an mindestens einem mit dem Gehäusedeckel (20) lösbar verbindbaren Bereich (56) des Nippels (50') angeordnet ist.

7. Vorrichtung gemäß mindestens einem der vorhergehenden Ansprüche, bei welcher (i) der Nippel oder (ii) das becherförmige Gehäuse derart ausgebildet sind, dass im verbundenen Zustand des Gehäusedeckels (20) mit dem Nippel (50; 50') zwischen Gehäusedeckel (20) und Nippel (50; 50') mindestens ein reinluftseitig angeordneter Flüssigkeitsablauf (28, 280) zum Ableiten der abgeschiedenen Flüssigkeit aus dem Innenraum (70) des becherförmigen Gehäuses (10) angeordnet ist, **dadurch gekennzeichnet, dass** der Flüssigkeitsablauf (28) sich spiralartig von der dem Innenraum (70) des becherförmigen Gehäuses (10) zugewandten Innenseite (24) des Gehäusedeckels (20) zur vom Innenraum (70) des becherförmigen Gehäuses (10) abgewandten Außenseite (25) des Gehäusedeckels (20) erstreckt.

8. Vorrichtung gemäß mindestens einem der vorhergehenden Ansprüche, **dadurch gekennzeichnet, dass** der mit dem Nippel (50; 50') lösbar verbindbare Bereich (26) des Gehäusedeckels (20) ein Innengewinde des Gehäusedeckels ist, wobei das Innengewinde zum lösbaren Verbinden des becherförmigen Gehäuses (10) mit dem Nippel (50; 50') mit einem Außengewinde des Nippels (50; 50') verschraubbar ist.

9. Vorrichtung gemäß mindestens einem der vorhergehenden Ansprüche, **dadurch gekennzeichnet, dass** der mit dem Nippel (50; 50') lösbar verbindbare Bereich (26) des Gehäusedeckels (20) derart ausgebildet ist, dass im verbundenen Zustand des Gehäusedeckels (20) mit dem Nippel (50; 50') zwischen Gehäusedeckel (20) und Nippel (50; 50') mehrere Flüssigkeitsabläufe (28) zum Ableiten der abgeschiedenen Flüssigkeit aus dem Innenraum (70) des becherförmigen Gehäuses (10) angeordnet sind und dass die Dichtfläche (60) eine Dichtung ist, mit mindestens einem sich in Richtung der Längsachse des becherförmigen Gehäuses (10) erstreckenden Fixierelement (62) zum Fixieren der Dichtung am Gehäusedeckel (20), wobei das Fixierelement (62) dazu ausgebildet ist, derart am Gehäusedeckel (20) angeordnet zu werden, dass es sich durch einen der Flüssigkeitsabläufe (28) erstreckt.

10. Vorrichtung gemäß mindestens einem der vorhergehenden Ansprüche, **dadurch gekennzeichnet, dass** die Dichtfläche (60; 60'; 60") derart ringförmig und radial zwischen Rohlufteinlass (22, 23) und Flüssigkeitsablauf (28) am Gehäusedeckel (20) angeordnet ist, dass sie (60; 60'; 60") den Rohlufteinlass (22, 23) vom Flüssigkeitsablauf (28) abdichtet.

11. Vorrichtung nach einem der vorhergehenden Ansprüche, wobei innerhalb des becherförmigen Gehäuses (10) auf der Reinluftseite des Filterelements ein Flüssigkeitssammelraum (230) vorgesehen ist, der mit dem Flüssigkeitsablauf (28, 280) verbindbar ist.

12. Vorrichtung gemäß einem der vorhergehenden Ansprüche, **dadurch gekennzeichnet, dass** der Nippel (50; 50') ein zum Trennen der abgeschiedenen Flüssigkeit von der gereinigten Luft ausgebildetes zylinderförmiges Rohrelement aufweist, das einstückig mit dem Nippel (50; 50') ausgebildet ist und in das Filterelement (210, 220), insbesondere in etwa bis in die Mitte des Filterelements (210, 220), hineinreicht und einen Reinluftauslass (52) zum Ableiten der gefilterten Reinluft aus dem becherförmigen Gehäuse (10) bildet.

13. Vorrichtung gemäß Anspruch 12, **dadurch gekennzeichnet, dass** der Reinluftauslass (52) des Nippels (50; 50') an den mit dem Gehäusedeckel (20) des becherförmigen Gehäuses (10) verbindbaren Bereich (56) des Nippels (50; 50') anschließt und/oder im Wesentlichen den gleichen Innendurchmesser aufweist wie der mit dem Gehäusedeckel (20) des becherförmigen Gehäuses (10) lösbar verbindbare Bereich (56) des Nippels (50; 50').

14. Vorrichtung gemäß einem der vorhergehenden Ansprüche, **dadurch gekennzeichnet, dass** der Flüssigkeitsablauf (28) dazu ausgebildet ist, im verbundenen Zustand des becherförmigen Gehäuses (10) mit dem Nippel (50; 50') die abgeschiedene Flüssigkeit aus dem Innenraum (70) des becherförmigen Gehäuses (10) zum Anschlusskopf (80) hin abzuleiten.

15. Vorrichtung gemäß einem der vorhergehenden Ansprüche **dadurch gekennzeichnet, dass** der Nippel (50; 50') mittig im becherförmigen Gehäuse (10) angeordnet ist und dass die Dichtfläche (60; 60'; 60") eine axiale Dichtfläche ist und derart zwischen dem Gehäusedeckel (20) und einem sich radial erstreckenden Vorsprung (54) des Nippels (50; 50') und/oder einem Bereich des Anschlusskopfes (80) angeordnet ist, dass sie den Flüssigkeitsablauf (28) von dem Rohlufteinlass (22, 23, 82, 84) der Vorrichtung (80) abdichtet.

16. Becherförmiges Gehäuse (10) für eine Vorrichtung zum Abscheiden von Flüssigkeit aus Luft nach einem der vorhergehenden Ansprüche 1 - 15, wobei das becherförmige Gehäuse (10) zur Aufnahme mindestens eines als insbesondere ringförmiger Coalescer ausgebildeten Filterelements (210, 220) zum Abscheiden von Flüssigkeit aus Luft ausgebildet ist und wobei das becherförmige Gehäuse (10) zum Verschließen seiner offenen Stirnseite einen Gehäusedeckel (20) aufweist, wobei der Gehäusedeckel (20) zum Abführen der gefilterten Reinluft mindestens eine mittig angeordnete reinluftseitige Öffnung (21) aufweist und wobei der Gehäusedeckel (20) zum Zuführen von Rohluft mindestens einen außermittig angeordneten rohluftseitigen Rohlufteinlass (22, 23) aufweist, wobei zum Abdichten zwischen der Rohluftseite und der Reinluftseite, insbesondere des rohluftseitigen Rohlufteinlasses (22, 23) von der reinluftseitigen Öffnung (21), an der vom Innenraum (70) des becherförmigen Gehäuses (10) abgewandten Außenseite (25) des Gehäusedeckels (20) zumindest bereichsweise mindestens eine Dichtfläche (60; 60'; 60") angeordnet ist, wobei die reinluftseitige Öffnung (21) zum Aufnehmen eines sich durch den Gehäusedeckel (20) in Richtung der Längsachse des becherförmigen Gehäuses (10) erstreckenden Nippels (50; 50') ausgebildet ist und wobei der Gehäusedeckel (20) im Bereich der reinluftseitigen Öffnung (21) zum lösbaren Verbinden des Gehäusedeckels (20) mit dem Nippel (50; 50') mindestens einen mit dem Nippel (50; 50') lösbar verbindbaren Bereich (26) aufweist, wobei die Dichtfläche (60; 60'; 60") derart am Gehäusedeckel (20) angeordnet ist, dass im verbundenen Zustand des Gehäusedeckels (20) mit dem Nippel (50; 50') die Dichtfläche (60; 60'; 60") zwischen Gehäusedeckel (20) und Nippel (50; 50') oder zwischen Gehäusedeckel (20) und einem mit dem Nippel (50; 50') verbundenen Anschlusskopf (80) angeordnet ist und den rohluftseitigen Rohlufteinlass (22, 23) von der reinluftseitigen Öffnung (21) abdichtet, **dadurch gekennzeichnet, dass** die Dichtfläche (60; 60'; 60") derart am Gehäusedeckel (20) angeordnet ist, dass sie (60; 60'; 60") den Rohlufteinlass (22, 23) von einem Flüssigkeitsablauf (28) abdichtet
wobei
i. der mit dem Nippel (50; 50') lösbar verbindbare Bereich (26) des Gehäusedeckels (20) derart ausgebildet ist, dass im verbundenen Zustand des Gehäusedeckels (20) mit dem Nippel (50; 50') zwischen Gehäusedeckel (20) und Nippel (50; 50') mindestens ein reinluftseitig angeordneter Flüssigkeitsablauf (28, 280) zum Ableiten der abgeschiedenen Flüssigkeit aus dem Innenraum (70) des becherförmigen Gehäuses (10) angeordnet ist, wobei der Flüssigkeitsablauf (28, 280) durch mindestens eine Nut oder mindestens eine kanalartige Ausnehmung gebildet ist, die am mit dem Nippel (50; 50') lösbar verbindbaren Bereich (26) des Gehäusedeckels (20) angeordnet ist, oder
ii. der Flüssigkeitsablauf durch mindestens eine Durchgangsbohrung (280) ausgeführt ist, die radial zwischen der reinluftseitigen Öffnung (21) und dem Rohlufteinlass (22, 23) angeordnet ist und sich in axialer Richtung von der dem Innenraum (70) des becherförmigen Gehäuses (10) zugewandten Innenseite (24) des Gehäusedeckels (20) zur vom Innenraum (70) des becherförmigen Gehäuses (10) abgewandten Außenseite (25) des Gehäusedeckels (20) durch den Gehäusedeckel (20) erstreckt.

17. Becherförmiges Gehäuse gemäß Anspruch 16, **dadurch gekennzeichnet, dass** der Flüssigkeitsablauf (28, 280) sich in Richtung der Längsachse des becherförmigen Gehäuses (10) von der dem Innenraum (70) des becherförmigen Gehäuses (10) zugewandten Innenseite (24) des Gehäusedeckels (20) zur vom Innenraum (70) des becherförmigen Gehäuses (10) abgewandten Außenseite (25) des Gehäusedeckels (20) erstreckt.

18. Becherförmiges Gehäuse gemäß mindestens einem der vorhergehenden Ansprüche 16 - 17, **dadurch gekennzeichnet, dass** ein Flüssigkeitsablauf (28) durch mindestens eine Nut oder mindestens eine kanalartige Ausnehmung oder Bohrung (280) im Gehäusedeckel (20) gebildet ist, die radial zwischen der mittig im Gehäusedeckel angeordneten reinluftseitigen Öffnung (21) und mindestens einem außermittig im Gehäusedeckel angeordneten rohluftseitigen Rohlufteinlass (22, 23) angeordnet ist, wobei die Dichtfläche (60; 60'; 60") derart ringförmig und radial zwischen Rohlufteinlass (22, 23) und Flüssigkeitsablauf (28) am Gehäusedeckel (20) angeordnet ist, dass sie (60; 60'; 60") den Rohlufteinlass (22, 23) vom Flüssigkeitsablauf (28) abdichtet.

19. Becherförmiges Gehäuse gemäß mindestens einem der vorhergehenden Ansprüche 16 - 18, **dadurch gekennzeichnet, dass** die Dichtfläche durch mindestens eine am Gehäusedeckel (20) angeordnete Dichtung, beispielsweise durch einen Dichtring, der die reinluftseitige Öffnung (21) umgibt, gebildet ist.

20. Becherförmiges Gehäuse gemäß mindestens einem der vorhergehenden Ansprüche 16 - 19, **dadurch gekennzeichnet, dass** die Dichtfläche (60, 60') so ausgelegt ist, dass im verbundenen Zustand des Gehäusedeckels (20) mit dem Nippel (50; 50') die Dichtfläche (60; 60') derart mit einem radialen Vorsprung (54) des Nippels (50; 50') oder einer korrespondierenden Dichtfläche eines Anschlusskopfes (80) zusammenwirkt, dass die reinluftseitige Öffnung (21) vom rohluftseitigen Rohlufteinlass (22, 23) abgedichtet ist.

## Claims

1. Apparatus (100) for separating liquid from air, featuring
a cup-shaped housing (10) with a filter element (210, 220) disposed therein, in particular designed as annular coalescer and
a fitting (50; 50') which can be connected to a connecting head (80) of a prime mover, in particular of a compressor, for example of an air compressor, and which is detachably connected to the cup-shaped housing (10),
wherein the cup-shaped housing (10) is designed to receive at least the filter element (210, 220), in particular designed as an annular coalescer, for separating liquid from air, and wherein the cup-shaped housing (10) features a housing cover for closing its open front side,
wherein the housing cover (20) features at least one centrally disposed opening (21) on the clean air side for discharging the filtered clean air, and
wherein the housing cover (20) features at least one raw air intake (22, 23) on the raw air side disposed off-centered for supplying raw air,
wherein for sealing between the raw air side and the clean air side, in particular the raw air intake (22, 23) on the raw air side from the opening (21) on the clean air side, at least one sealing surface (60; 60'; 60") is disposed at least in some areas on the exterior side (25) of the housing cover (20) facing away from the interior space (70) of the cup-shaped housing (10),
wherein the opening (21) on the clean air side is designed to receive the fitting (50; 50') extending through the housing cover (20) in the direction of the longitudinal axis of the cup-shaped housing (10), and
wherein the housing cover (20) features, in the area of the opening (21) on the clean air side, at least one area (26) which can be detachably connected to the fitting (50; 50'), wherein the sealing surface (60; 60'; 60") is disposed on the housing cover (20) in such a way that, when the housing cover (20) is connected to the fitting (50; 50'), the sealing surface (60; 60'; 60") is disposed between housing cover (20) and fitting (50; 50') or between housing cover (20) and a connecting head (80) connected to the fitting (50; 50') and seals the raw air intake (22, 23) on the raw air side from the opening (21) on the clean air side,
**characterized in that**
i. the fitting is designed in such a way that, when the housing cover (20) is connected to the fitting (50; 50'), at least one liquid drain (28, 280) disposed on the clean air side is disposed between the housing cover (20) and the fitting (50; 50') for discharging the separated liquid from the interior space (70) of the cup-shaped housing (10), or
ii. the cup-shaped housing, in particular the area (26) which can be detachably connected to the fitting (50; 50') of the housing cover (20) is designed in such a way that, when the housing cover (20) is connected to the fitting (50; 50'), at least one liquid drain (28, 280) disposed on the clean air side is disposed between the housing cover (20) and the fitting (50; 50') for discharging the separated liquid from the interior space (70) of the cup-shaped housing (10), or
iii. a liquid drain is realized through at least one through hole (280) which is radially disposed between the opening (21) on the clean air side and the raw air intake (22, 23) and extends in the axial direction through the housing cover (20) from the interior side (24) of the housing cover (20) facing the interior space (70) of the cup-shaped housing (10) to the exterior side (25) of the housing cover (20) facing away from the interior space (70) of the cup-shaped housing (10),
further **characterized in that** the sealing surface (60; 60'; 60") is disposed on the housing cover (20) in such a way that it (60; 60'; 60") seals the raw air intake (22, 23) from the liquid drain (28).

2. Apparatus according to claim 1, **characterized in that** the sealing surface is formed by a surface of the housing cover (20), for example by a metallic surface of the housing cover (20).

3. Apparatus according to claim 1 or 2, **characterized in that** the sealing surface is formed by at least one seal disposed on the housing cover (20), for example by a sealing ring surrounding the opening (21) on the clean air side.

4. Apparatus according to at least one of the preceding claims, **characterized in that** the sealing surface (60; 60') is designed in such a way that, when the housing cover (20) is connected to the fitting (50; 50'), the sealing surface (60; 60') interacts with a radial protrusion (54) of the fitting (50; 50') or of a corresponding sealing surface of a connecting head (80) in such a way that the opening (21) on the clean air side is sealed from the raw air intake (22, 23) on the raw air side.

5. Apparatus according to at least one of the preceding claims, **characterized in that** the liquid drain (28, 280) extends in the direction of the longitudinal axis of the cup-shaped housing (10) from the interior side (24) of the housing cover (20) facing the interior space (70) of the cup-shaped housing (10) to the exterior side (25) of the housing cover (20) facing away from the interior space (70) of the cup-shaped housing (10).

6. Apparatus according to at least one of the preceding claims, in which (i) the fitting or (ii) the cup-shaped housing are designed in such a way that, when the housing cover (20) is connected to the fitting (50; 50'), at least one liquid drain (28, 280) disposed on the clean air side is disposed between housing cover (20) and fitting (50; 50') for discharging the separated liquid from the interior space (70) of the cup-shaped housing (10), **characterized in that** the liquid drain (28, 280) is formed by at least one groove or at least one channel-like recess which is disposed at the area (26) of the housing cover (20) which can be detachably connected to the fitting (50; 50'), and/or at least at one area (56) of the fitting (50') which can be detachably connected to the housing cover (20).

7. Apparatus according to at least one of the preceding claims, in which (i) the fitting or (ii) the cup-shaped housing are designed in such a way that, when the housing cover (20) is connected to the fitting (50; 50'), at least one liquid drain (28, 280) disposed on the clean air side is disposed between housing cover (20) and fitting (50; 50') for discharging the separated liquid from the interior space (70) of the cup-shaped housing (10), **characterized in that** the liquid drain (28) extends spirally from the interior side (24) of the housing cover (20) facing the interior space (70) of the cup-shaped housing (10) to the exterior side (25) of the housing cover (20) facing away from the interior space (70) of the cup-shaped housing (10).

8. Apparatus according to at least one of the preceding claims, **characterized in that** the area (26) of the housing cover (20) which can be detachably connected to the fitting (50; 50') is an internal thread of the housing cover, wherein the internal thread is screwable to an external thread of the fitting (50; 50') for detachably connecting the cup-shaped housing (10) to the fitting (50; 50').

9. Apparatus according to at least one of the preceding claims, **characterized in that** the area (26) of the housing cover (20) which can be detachably connected to the fitting (50; 50') is designed in such a way that, when the housing cover (20) is connected to the fitting (50; 50'), several liquid drains (28) are disposed between housing cover (20) and fitting (50; 50') for discharging the separated liquid from the interior space (70) of the cup-shaped housing (10) and that the sealing surface (60) is a seal with at least one fixing element (62) extending in the direction of the longitudinal axis of the cup-shaped housing (10) for fixing the seal on the housing cover (20), wherein the fixing element (62) is designed to be disposed at the housing cover (20) in such a way that it extends through one of the liquid drains (28).

10. Apparatus according to at least one of the preceding claims, **characterized in that** the sealing surface (60; 60'; 60") is disposed in such a way annularly and radially between raw air intake (22, 23) and liquid drain (28) on the housing cover (20) in such a way that it (60; 60'; 60") seals the raw air intake (22, 23) from the liquid drain (28).

11. Apparatus according to one of the preceding claims, wherein a liquid-collecting chamber (230) is provided inside the cup-shaped housing (10) on the clean air side of the filter element, which is connectable to the liquid drain (28, 280).

12. Apparatus according to one of the preceding claims, **characterized in that** the fitting (50; 50') features a cylindrical tubular element designed to separate the separated liquid from the cleaned air, the tubular element being formed as one piece with the fitting (50; 50') and extending into the filter element (210, 220), in particular approximately into the center of the filter element (210, 220), and forming a clean air outlet (52) for discharging the filtered clean air from the cup-shaped housing (10).

13. Apparatus according to claim 12, **characterized in that** the clean air outlet (52) of the fitting (50; 50') connects to the area (56) of the fitting (50; 50') which can be connected to the housing cover (20) of the cup-shaped housing (10) and/or features substantially the same internal diameter as the area (56) of the fitting (50; 50') which can be detachably connected to the housing cover (20) of the cup-shaped housing (10).

14. Apparatus according to one of the preceding claims, **characterized in that** the liquid drain (28) is designed to discharge, when the cup-shaped housing (10) is connected to the fitting (50; 50'), the separated liquid from the interior space (70) of the cup-shaped housing (10) towards the connecting head (80).

15. Apparatus according to one of the preceding claims, **characterized in that** the fitting (50; 50') is disposed centrally in the cup-shaped housing (10) and that the sealing surface (60; 60'; 60") is an axial sealing surface and disposed between the housing cover (20) and a radially extending projection (54) of the fitting (50; 50') and/or an area of the connecting head (80) in such a way that it seals the liquid drain (28) from the raw air intake (22, 23, 82, 84) of the apparatus (80).

16. Cup-shaped housing (10) for an apparatus for separating liquid from air according to one of the preceding claims 1-15, wherein the cup-shaped housing (10) is designed to receive at least one filter element (210, 220), in particular an annular coalescer, for separating liquid from air and wherein the cup-shaped housing (10) features a housing cover (20) for closing its open front side, wherein the housing cover (20) features at least one centrally disposed opening (21) on the clean air side for discharging the filtered clean air, and wherein the housing cover (20) for supplying raw air features at least one raw air intake (22, 23) arranged off-centered on the raw air side, wherein for sealing between the raw air side and the clean air side, in particular the raw air intake (22, 23) on the raw air side from the opening (21) on the clean air side, at least in some areas at least one sealing surface (60; 60'; 60") is provided on the exterior side (25) of the housing cover (20) facing away from the interior space (70) of the cup-shaped housing (10), wherein the opening (21) on the clean air side is designed to receive a fitting (50; 50') extending through the housing cover (20) in the direction of the longitudinal axis of the cup-shaped housing (10), and wherein the housing cover (20) features at least one area (26) which can be detachably connected to the fitting (50; 50') in the area of the opening (21) on the clean air side for detachably connecting the housing cover (20) to the fitting (50; 50'), wherein the sealing surface (60; 60'; 60") is disposed on the housing cover (20) in such a way that, when the housing cover (20) is connected to the fitting (50; 50'), the sealing surface (60; 60'; 60") is disposed between the housing cover (20) and the fitting (50; 50') or between the housing cover (20) and a connecting head (80) connected to the fitting (50'); 50') and seals the raw air intake (22, 23) on the raw air side from the opening (21) on the clean air side, **characterized in that** the sealing surface (60; 60'; 60") is disposed on the housing cover (20) in such a way that it (60; 60'; 60") seals the raw air intake (22, 23) from a liquid drain (28)
wherein
i. the area (26) of the housing cover (20) which can be detachably connected to the fitting (50; 50') is designed in such a way that, when the housing cover (20) is connected to the fitting (50; 50'), at least one liquid drain (28, 280) disposed on the clean air side is disposed between housing cover (20) and fitting (50; 50') for discharging the separated liquid from the interior space (70) of the cup-shaped housing (10), wherein the liquid drain (28, 280) is formed by at least one groove or at least one channel-like recess which is disposed at the area (26) of the housing cover (20) which can be detachably connected to the fitting (50; 50'), or
ii. the liquid drain is realized through at least one through hole (280) which is radially disposed between the opening (21) on the clean air side and the raw air intake (22, 23) and extends in the axial direction through the housing cover (20) from the interior side (24) of the housing cover (20) facing the interior space (70) of the cup-shaped housing (10) to the exterior side (25) of the housing cover (20) facing away from the interior space (70) of the cup-shaped housing (10).

17. Cup-shaped housing according to claim 16, **characterized in that** the liquid drain (28, 280) extends in the direction of the longitudinal axis of the cup-shaped housing (10) from the interior side (24) of the housing cover (20) facing the interior space (70) of the cup-shaped housing (10) to the exterior side (25) of the housing cover (20) facing away from the interior space (70) of the cup-shaped housing (10).

18. Cup-shaped housing according to at least one of the preceding claims 16-17, **characterized in that** a liquid drain (28) is formed by at least one groove or at least one channel-like recess or borehole (280) in the housing cover (20), which is disposed radially between the opening (21) on the clean air side disposed centrally in the housing cover and at least one raw air intake (22, 23) on the raw air side arranged off-centered in the housing cover, wherein the sealing surface (60; 60'; 60") is disposed annularly and radially between the raw air intake (22, 23) and the liquid drain (28) on the housing cover (20) in such a way that it (60; 60'; 60") seals the raw air intake (22, 23) from the liquid drain (28).

19. Cup-shaped housing according to at least one of the preceding claims 16-18, **characterized in that** the sealing surface is formed by at least one seal disposed at the housing cover (20), for example by a sealing ring surrounding the opening (21) on the clean air side.

20. Cup-shaped housing according to at least one of the preceding claims 16-19, **characterized in that** the sealing surface (60; 60') is designed in such a way that, when the housing cover (20) is connected to the fitting (50; 50'), the sealing surface (60; 60') interacts with a radial protrusion (54) of the fitting (50; 50') or of a corresponding sealing surface of a connecting head (80) in such a way that the opening (21) on the clean air side is sealed from the raw air intake (22, 23) on the raw air side.

## Revendications

1. Dispositif (100) destiné à séparer du liquide de l'air, comportant
un boîtier (10) en forme de coupe avec, à l'intérieur, un élément filtrant (210, 220) conçu en particulier en tant que coalesceur annulaire et
un raccord (50; 50') qui peut être relié à une tête de raccord (80) d'un moteur, en particulier d'un compresseur, par exemple d'un compresseur d'air comprimé, et qui est relié de manière amovible au boîtier (10) en forme de coupe,
le boîtier (10) en forme de coupe étant conçu pour réceptionner au moins l'élément filtrant (210, 220) conçu en particulier en tant que coalesceur annulaire et destiné à séparer du liquide de l'air, et le boîtier (10) en forme de coupe étant doté, pour obturer sa face frontale ouverte, d'un couvercle de boîtier,
le couvercle de boîtier (20) destiné à évacuer l'air pur filtré présentant au moins une ouverture (21) centrée côté air pur et
le couvercle de boîtier (20) destiné à amener l'air brut présentant au moins une entrée d'air brut (22, 23) décentrée côté air brut,
au moins une surface d'étanchéité (60; 60'; 60") étant disposée, au moins dans certaines zones, sur la face extérieure (25) du couvercle de boîtier (20) orientée à l'opposé de l'espace intérieur (70) du boîtier (10) en forme de coupe pour assurer l'étanchéité entre le côté air brut et le côté air pur, en particulier de l'entrée d'air brut côté air brut (22, 23) de l'ouverture côté air pur (21),
l'ouverture (21) côté air pur étant conçue pour réceptionner le raccord (50; 50') s'étendant à travers le couvercle de boîtier (20) en direction de l'axe longitudinal du boîtier (10) en forme de coupe et
le couvercle de boîtier (20) comportant dans la zone de l'ouverture (21) côté air pur au moins une zone (26) pouvant être raccordée de manière amovible au raccord (50; 50'), la surface d'étanchéité (60; 60'; 60") étant disposée sur le couvercle de boîtier (20) de telle manière que, lorsque le couvercle de boîtier (20) est relié au raccord (50; 50'), la surface d'étanchéité (60; 60'; 60") se trouve entre le couvercle de boîtier (20) et le raccord (50; 50') ou entre le couvercle de boîtier (20) et une tête de raccord (80) reliée au raccord (50 ; 50') et étanche l'entrée d'air brut (22, 23) côté air brut par rapport à l'ouverture (21) côté air pur, **caractérisée en ce que**
i. le raccord est conçu de telle manière que, lorsque le couvercle de boîtier (20) est relié au raccord (50; 50'), au moins un écoulement de liquide (28, 280) disposé du côté air pur se trouve entre le couvercle de boîtier (20) et le raccord (50; 50') afin de faire écouler le liquide séparé de l'espace intérieur (70) du boîtier (10) en forme de coupe, ou
ii. le boîtier en forme de coupe, en particulier la zone (26) du couvercle de boîtier (20) pouvant être reliée de manière amovible au raccord (50; 50'), est conçu de telle manière que, lorsque le couvercle de boîtier (20) est relié au raccord (50; 50'), au moins un écoulement de liquide (28, 280) disposé du côté air pur se trouve entre le couvercle de boîtier (20) et le raccord (50; 50') afin de faire écouler le liquide séparé de l'espace intérieur (70) du boîtier (10) en forme de coupe, ou
iii. un écoulement de liquide traverse au moins un trou de passage (280) qui est disposé en sens radial entre l'ouverture (21) côté air pur et l'entrée d'air brut (22, 23) et qui s'étend en sens axial, à travers le couvercle de boîtier (20), de la face intérieure (24) du couvercle de boîtier (20) orientée vers l'espace intérieur (70) du boîtier (10) en forme de coupe vers la face extérieure (25) du couvercle de boîtier (20) orientée à l'opposé de l'espace intérieur (70) du boîtier (10) en forme de coupe,
et également **caractérisé en ce que** la surface d'étanchéité (60; 60'; 60") est disposée sur le couvercle de boîtier (20) de manière à ce qu'elle (60; 60'; 60") étanche l'entrée d'air brut (22, 23) de l'écoulement de liquide (28).

2. Dispositif selon la revendication 1, **caractérisé en ce que** la surface d'étanchéité est formée par une surface du couvercle de boîtier (20), par exemple par une surface métallique du couvercle de boîtier (20).

3. Dispositif selon la revendication 1 ou 2, **caractérisé en ce que** la surface d'étanchéité est formée par au moins un joint placé sur le couvercle de boîtier (20), par exemple par une bague d'étanchéité, qui encercle l'ouverture (21) côté air pur.

4. Dispositif selon au moins l'une des revendications précédentes, **caractérisé en ce que** la surface d'étanchéité (60; 60') est conçue de manière à ce que, lorsque le couvercle de boîtier (20) est relié au raccord (50; 50'), la surface d'étanchéité (60; 60') interagisse avec une saillie (54) radiale du raccord (50; 50') ou une surface d'étanchéité correspondante d'une tête de raccord (80) de sorte que l'ouverture (21) côté air pur soit étanchée par rapport à l'entrée d'air brut (22, 23) côté air brut.

5. Dispositif selon au moins l'une des revendications précédentes, **caractérisé en ce que** l'écoulement de liquide (28, 280) s'étend en direction de l'axe longitudinal du boîtier (10) en forme de coupe, de la face intérieure (24) du couvercle de boîtier (20) orientée vers l'espace intérieur (70) du boîtier (10) en forme de coupe vers la face extérieure (25) du couvercle de boîtier (20) orientée à l'opposé de l'espace intérieur (70) du boîtier (10) en forme de coupe.

6. Dispositif selon au moins l'une des revendications précédentes, dans lequel (i) le raccord ou (ii) le boîtier en forme de coupe est conçu de telle manière que, lorsque le couvercle de boîtier (20) est relié au raccord (50; 50'), au moins un écoulement de liquide (28, 280) disposé du côté air pur se trouve entre le couvercle de boîtier (20) et le raccord (50; 50') afin de faire écouler le liquide séparé de l'espace intérieur (70) du boîtier (10) en forme de coupe, **caractérisé en ce que** l'écoulement de liquide (28, 280) est formé par au moins une rainure ou au moins un évidement en forme de canal qui est disposé/disposée dans la zone (26) du couvercle de boîtier (20) pouvant être reliée de manière amovible au raccord (50; 50') et/ou dans au moins une zone (56) du raccord (50') pouvant être reliée de manière amovible au couvercle de boîtier (20).

7. Dispositif selon au moins l'une des revendications précédentes, dans lequel (i) le raccord ou (ii) le boîtier en forme de coupe sont conçus de telle manière que, lorsque le couvercle de boîtier (20) est relié au raccord (50; 50'), au moins un écoulement de liquide (28, 280) disposé du côté air pur se trouve entre le couvercle de boîtier (20) et le raccord (50; 50') afin de faire écouler le liquide séparé de l'espace intérieur (70) du boîtier (10) en forme de coupe, **caractérisé en ce que** l'écoulement de liquide (28) s'étend en forme de spirale de la face intérieure (24) du couvercle de boîtier (20) orientée vers l'espace intérieur (70) du boîtier (10) en forme de coupe vers la face extérieure (25) du couvercle de boîtier (20) orientée à l'opposé de l'espace intérieur (70) du boîtier (10) en forme de coupe.

8. Dispositif selon au moins l'une des revendications précédentes, **caractérisé en ce que** la zone (26) du couvercle de boîtier (20) pouvant être reliée de manière amovible au raccord (50; 50') est un filet intérieur du couvercle de boîtier, le filet intérieur servant à relier de manière amovible le boîtier (10) en forme de coupe au raccord (50; 50') pouvant être vissé avec un filet extérieur du raccord (50; 50').

9. Dispositif selon au moins l'une des revendications précédentes, **caractérisé en ce que** la zone (26) du couvercle de boîtier (20) pouvant être reliée de manière amovible au raccord (50; 50') est conçue de telle manière que, lorsque le couvercle de boîtier (20) est relié au raccord (50; 50'), plusieurs écoulements de liquide (28) soient disposés entre le couvercle de boîtier (20) et le raccord (50, 50') afin de faire écouler le liquide séparé de l'espace intérieur (70) du boîtier (10) en forme de coupe et que la surface d'étanchéité (60) soit un joint, avec au moins un élément de fixation (62) s'étendant en direction de l'axe longitudinal du boîtier (10) en forme de coupe et destiné à fixer le joint au couvercle de boîtier (20), l'élément de fixation (62) étant conçu pour être disposé sur le couvercle de boîtier (20) de manière à ce qu'il passe à travers l'un des écoulements de liquide (28).

10. Dispositif selon au moins l'une des revendications précédentes, **caractérisé en ce que** la surface d'étanchéité (60; 60'; 60") est disposée de manière annulaire et radiale entre l'entrée d'air brut (22, 23) et l'écoulement de liquide (28) sur le couvercle de boîtier (20) de telle manière que ladite surface (60; 60'; 60") étanche l'entrée d'air brut (22, 23) par rapport à l'écoulement de liquide (28).

11. Dispositif selon l'une des revendications précédentes, un espace collecteur de liquide (230) étant prévu à l'intérieur du boîtier (10) en forme de coupe, du côté air pur de l'élément filtrant, et pouvant être relié à l'écoulement de liquide (28, 280).

12. Dispositif selon l'une des revendications précédentes, **caractérisé en ce que** le raccord (50; 50') comporte un élément tubulaire cylindrique pour séparer le liquide séparé de l'air purifié, réalisé en un bloc avec le raccord (50; 50') et pénétrant dans l'élément filtrant (210, 220), notamment jusqu'au milieu, approximativement, de l'élément filtrant (210, 220), et formant une sortie d'air pur (52) destinée à évacuer l'air pur filtré du boîtier (10) en forme de coupe.

13. Dispositif selon la revendication 12, **caractérisé en ce que** la sortie d'air pur (52) du raccord (50; 50') se raccorde à la zone (56) du raccord (50; 50') pouvant être reliée au couvercle de boîtier (20) du boîtier (10) en forme de coupe et/ou a essentiellement le même diamètre intérieur que la zone (56) du raccord (50; 50') pouvant être reliée de manière amovible au couvercle de boîtier (20) du boîtier (10) en forme de coupe.

14. Dispositif selon l'une des revendications précédentes, **caractérisé en ce que** l'écoulement de liquide (28) est conçu pour, lorsque le boîtier (10) en forme de coupe est relié au raccord (50; 50'), faire écouler le liquide séparé de l'espace intérieur (70) du boîtier (10) en forme de coupe vers la tête de raccord (80).

15. Dispositif selon l'une des revendications précédentes, **caractérisé en ce que** le raccord (50; 50') est placé de manière centrée dans le boîtier (10) en forme de coupe et que la surface d'étanchéité (60; 60'; 60") est une surface d'étanchéité axiale qui est disposée entre le couvercle de boîtier (20) et une saillie (54) évoluant en sens radial du raccord (50; 50') et/ou une zone de la tête de raccord (80) de manière à ce qu'elle étanche l'écoulement de liquide (28) par rapport à l'entrée d'air brut (22, 23, 82, 84) du dispositif (80).

16. Boîtier (10) en forme de coupe pour un dispositif destiné à séparer du liquide de l'air selon l'une des revendications 1 à 15 précédentes, le boîtier (10) en forme de coupe étant conçu pour réceptionner au moins un élément filtrant (210, 220) conçu en particulier en tant que coalesceur annulaire et destiné à séparer du liquide de l'air, le boîtier (10) en forme de coupe étant doté, pour obturer sa face frontale ouverte, d'un couvercle de boîtier (20), le couvercle de boîtier (20) destiné à évacuer l'air pur filtré présentant au moins une ouverture (21) centrée côté air pur et le couvercle de boîtier (20) destiné à amener l'air brut présentant au moins une entrée d'air brut (22, 23) décentrée côté air brut, au moins une surface d'étanchéité (60; 60'; 60") étant disposée, au moins dans certaines zones, sur la face extérieure (25) du couvercle de boîtier (20) orientée à l'opposé de l'espace intérieur (70) du boîtier (10) en forme de coupe pour assurer l'étanchéité entre le côté air brut et le côté air pur, en particulier de l'entrée d'air brut (22, 23) côté air brut de l'ouverture (21) côté air pur, l'ouverture (21) côté air pur étant conçue pour réceptionner un raccord (50; 50') s'étendant à travers le couvercle de boîtier (20) en direction de l'axe longitudinal du boîtier (10) en forme de coupe et le couvercle de boîtier (20) comportant dans la zone de l'ouverture (21) côté air pur, afin de raccorder le couvercle de boîtier (20) au raccord (50, 50'), au moins une zone (26) pouvant être raccordée de manière amovible au raccord (50; 50'), la surface d'étanchéité (60; 60'; 60") étant disposée sur le couvercle de boîtier (20) de telle manière que, lorsque le couvercle de boîtier (20) est relié au raccord (50; 50'), la surface d'étanchéité (60; 60'; 60") se trouve entre le couvercle de boîtier (20) et le raccord (50; 50') ou entre le couvercle de boîtier (20) et une tête de raccord (80) reliée au raccord (50; 50') et étanche l'entrée d'air brut (22, 23) côté air brut par rapport à l'ouverture (21) côté air pur, **caractérisé en ce que** la surface d'étanchéité (60; 60'; 60") est disposée sur le couvercle de boîtier (20) de manière à ce qu'elle étanche (60; 60'; 60") l'entrée d'air brut (22, 23) d'un écoulement de liquide (28)
i. la zone (26) du couvercle de boîtier (20) pouvant être reliée de manière amovible au raccord (50; 50') étant conçue de telle manière que, lorsque le couvercle de boîtier (20) est relié au raccord (50; 50'), au moins un écoulement de liquide (28, 280) disposé du côté air pur soit prévu entre le couvercle de boîtier (20) et le raccord (50, 50') afin de faire écouler le liquide séparé de l'espace intérieur (70) du boîtier (10) en forme de coupe, l'écoulement de liquide (28, 280) étant formé par au moins une rainure ou au moins un évidement en forme de canal qui est disposée/disposé dans la zone (26) du couvercle de boîtier (20) pouvant être reliée de manière amovible au raccord (50; 50'), ou
ii. l'écoulement de liquide traverse au moins un trou de passage (280) qui est disposé en sens radial entre l'ouverture (21) côté air pur et l'entrée d'air brut (22, 23) et qui s'étend en sens axial, à travers le couvercle de boîtier (20), de la face intérieure (24) du couvercle de boîtier (20) orientée vers l'espace intérieur (70) du boîtier (10) en forme de coupe vers la face extérieure (25) du couvercle de boîtier (20) orientée à l'opposé de l'espace intérieur (70) du boîtier (10) en forme de coupe.

17. Boîtier en forme de coupe selon la revendication 16, **caractérisé en ce que** l'écoulement de liquide (28, 280) s'étend en direction de l'axe longitudinal du boîtier (10) en forme de coupe, de la face intérieure (24) du couvercle de boîtier (20) orientée vers l'espace intérieur (70) du boîtier (10) en forme de coupe vers la face extérieure (25) du couvercle de boîtier (20) orientée à l'opposé de l'espace intérieur (70) du boîtier (10) en forme de coupe.

18. Boîtier en forme de coupe selon au moins l'une des revendications 16 à 17 précédentes, **caractérisé en ce qu'**un écoulement de liquide (28) est formé par au moins une rainure ou au moins un évidement en forme de canal ou un perçage (280) dans le couvercle de boîtier (20) qui est disposée/disposé en sens radial entre l'ouverture (21) côté air pur centré dans le couvercle de boîtier et au moins une entrée d'air brut (22, 23) décentrée côté air brut dans le couvercle de boîtier, la surface d'étanchéité (60; 60'; 60") étant disposée de manière annulaire et radiale sur le couvercle de boîtier (20) entre l'entrée d'air brut (22, 23) et l'écoulement de liquide (28) de sorte à ce que ladite surface (60; 60'; 60") étanche l'entrée d'air brut (22, 23) par rapport à l'écoulement de liquide (28).

19. Boîtier en forme de coupe selon au moins l'une des revendications 16 à 18 précédentes, **caractérisé en ce que** la surface d'étanchéité est formée par au moins un joint placé sur le couvercle de boîtier (20), par exemple par une bague d'étanchéité, qui encercle l'ouverture (21) côté air pur.

20. Boîtier en forme de coupe selon au moins l'une des revendications 16 à 19 précédentes, **caractérisé en ce que** la surface d'étanchéité (60; 60') est conçue de manière à ce que, lorsque le couvercle de boîtier (20) est relié au raccord (50; 50'), la surface d'étanchéité (60; 60') interagisse avec une saillie (54) radiale du raccord (50; 50') ou une surface d'étanchéité correspondante d'une tête de raccord (80) de sorte que l'ouverture (21) côté air pur soit étanchée par rapport à l'entrée d'air brut (22, 23) côté air brut.
